# EUROPÄISCHE PATENTSCHRIFT

(11) **EP 1 620 338 B1**
(45) Veröffentlichungstag und Bekanntmachung des Hinweises auf die Patenterteilung: **01.10.2008**
(21) Anmeldenummer: 04803938.2
(22) Anmeldetag: 16.12.2004
(51) Int. Cl.: B65G 47/90, B65B 35/30, B65B 35/36

(54) **VERFAHREN UND VORRICHTUNG ZUM HANDHABEN STABFÖRMIGER OBJEKTE**
METHOD AND DEVICE FOR HANDLING ROD-SHAPED OBJECTS
PROCEDE ET DISPOSITIF POUR MANOEUVRER DES OBJETS EN FORME DE TIGES

(30) Priorität: 20.12.2003 DE 10360160
(43) Veröffentlichungstag der Anmeldung: 01.02.2006
(73) Patentinhaber: KUKA InnoTec GmbH, 86165 Augsburg (DE)
(72) Erfinder: COTTONE, Norbert, 86441 Zusmarshausen (DE)
(74) Vertreter: Lempert, Jost
(86) Internationale Anmeldenummer: PCT/EP2004/014325
(87) Internationale Veröffentlichungsnummer: WO 2005/061353

(56) Entgegenhaltungen:
- DE-A1- 2 714 352
- DE-A1- 10 210 353
- US-A- 4 251 979
- US-A- 5 328 319
- US-A1- 5 136 826

## Beschreibung

Die Erfindung betrifft ein Verfahren zum Handhaben im Wesentlichen stabförmiger Objekte nach den Oberbegriffen des Anspruchs 1 bzw. des Anspruchs 21.

Zur Aufnahme von Lebensmitteln in der Molkereiindustrie, wie Joghurt, Milchgetränken oder dergleichen, werden oft Becher aus tiefgezogenen Kunststofffolien verwendet. Die vorgenannten Becher sind dabei in der Regel so ausgebildet, dass sie ineinander gestapelt werden können. Die auf diese Weise gebildeten Reihen von ineinander verschachtelten Bechern werden im Folgenden als Becherstangen bezeichnet.

In der Praxis werden die Becher nach ihrer Herstellung in einer entsprechenden Tiefziehmaschine in Form von Becherstangen direkt einer Weiterbearbeitungsmaschine, wie einer Dekoriermaschine zum Bedrucken der Becher, zugeführt und anschließend für einen Transport, beispielsweise zu einer Befüllmaschine, in Ladehilfsmittel, insbesondere Kartons, verpackt. Auch ein Verpacken in die genannten Ladehilfsmittel direkt nach der Herstellung ist in der Praxis möglich.

Bei vorbekannten Verfahren und Vorrichtungen etwa der eingangs genannten Art werden die Ladevorgänge in Verbindung mit einem Ladehilfsmittel, d.h. das Ein- und Auspacken von Becherstangen, in einen bzw. aus einem Karton manuell oder teilautomatisiert durchgeführt: In der Regel werden die Kunststoffbecher aus Polypropylen (PP) oder Polystyrol (PS) in einem Thermo-Tiefziehverfahren hergestellt. Dazu wird eine extrudierte Folie der Tiefziehmaschine zugeführt und in dieser erhitzt, anschließend durch Vorstrecker vorgeformt und schließlich beispielsweise mittels Druckluft in eine Form gepresst, gekühlt und ausgestanzt. Die fertigen, noch heißen und leicht verformbaren Becher werden in der Tiefziehmaschine ausgestapelt (Ineinanderstapeln von mehreren Bechern zu einer Becherstange) und anschließend entweder automatisch einer Weiterverarbeitungsmaschine zum Dekorieren (Bedrucken) zugeführt oder manuell in einen Karton verpackt. Aus Hygienegründen weist der Karton innen häufig eine Auskleidung in Form eines Kunststoffbeutels auf.

Vorbekannte Verfahren und Vorrichtungen etwa der eingangs genannten Art weisen eine Vielzahl von Nachteilen auf. So ist bislang keine Vorrichtung bekannt, mit der sämtliche beim genannten Handhaben stabförmiger Objekte durchzuführenden Verfahrensschritte, insbesondere das Ablegen in bzw. das Entnehmen aus einem Ladehilfsmittel, vollautomatisch durchführbar sind. Weiterhin ist bei bekannten Vorrichtungen zum automatischen Einpacken von Becherstangen in Ladehilfsmittel beim Umstellen auf einen neuen Becherdurchmesser oder Bechertyp ein zeit- und kostenaufwändiges Umrüsten verschiedener Maschinenelemente notwendig, wodurch sich insgesamt eine geringere Variantenflexibilität ergibt. Darüber hinaus erzeugen die meisten Tiefziehmaschinen pro Tiefziehtakt nicht nur einen einzelnen Becher, sondern gleichzeitig eine Vielzahl von Einzelbechern nach einem bestimmten Muster. Dieses ist in der Regel zweidimensional und wird als Kavität bezeichnet. Da die Übergabe der Becher von der Tiefziehmaschine an den nächsten Handhabungs- oder Verarbeitungsschritt, beispielsweise Dekorieren oder Verpacken, im allgemeinen in Form von Becherstangen, also eindimensional, erfolgt, muss in einer der Tiefziehmaschinen eine entsprechende Vorrichtung integriert sein, durch die eine Kavität in einzelne Becherstangen umsetzbar ist. Dadurch werden die entsprechenden Tiefziehmaschinen aufwändiger und in der Herstellung und Wartung entsprechend teurer.

Zudem erfolgt die Weitergabe der Becherstangen bei bekannten Tiefziehmaschinen in der Regel seitlich liegend. Durch das seitliche Weiterschieben der Becherstangen wirken Kräfte, wie Gewichtskraft und Reibungskräfte, auf einen Siegelrand der Becher ein, was die Herstellungsqualität des Bechers grundsätzlich negativ beeinflusst, zumal die Becher nach dem Tiefziehen noch eine Temperatur von 80°C aufweisen und deshalb besonders leicht verformbar sind. Das Abfüllen und Verschließen eines Joghurt-Bechers stellt extrem hohe Anforderungen an den genannten Siegelrand hinsichtlich Toleranz, Rundheit und Winkellage gegenüber einer Becherachse, so dass dieser Nachteil des Standes der Technik sich in besonders gravierender Weise auswirkt.

Schließlich ist es bei vorgekannten Verfahren und Vorrichtungen speziell zum Einpacken von Becherstangen in Ladehilfsmittel, wie Kartons, nicht möglich, ein Packmuster im Karton derart einzustellen, dass eine größtmögliche Pakkungsdichte, d.h. eine maximal mögliche Anzahl von Becherstangen pro Karton, erreichbar ist.

Aus der US 4,251,979 ist eine Vorrichtung zum Fördern und Ausrichten von flaschenförmigen Behältern bekannt. Die beschriebene Vorrichtung weist einen Haltemechanismus 14 für eine Gruppe von Behältern 16 auf, die von einem Förderband 11 entnommen werden, wobei anschließend eine geometrische Anordnung der Behälter in der Gruppe durch relatives Verschieben von Halteeinrichtungen für die Behälter innerhalb des Haltemechanismus verändert wird. Anschließend wird die Behältergruppe in ein Ladehilfsmittel eingebracht.

Die DE 102 10 353 A1 beschreibt ein Verfahren und eine Vorrichtung zum Umsetzen von Flaschen, wobei die Flaschen mit Packtulpen aufgenommen und einer Verpackung zugeführt werden und wobei die Packtulpen nach der Aufnahme der Flaschen und vor dem Einsetzen der Flaschen in die Verpackung zwecks Veränderung einer geometrischen Anordnung der Flaschen vor dem Einsetzen derselben in die Verpackung zueinander verfahren werden.

Weiterhin ist aus der DE 40 30 215 C2 eine Vorrichtung zum Handhaben, speziell zum Entnehmen, von Becherstangen bekannt, die in einem offenen Transportbehälter liegend angeliefert werden. Dazu ist die Verwendung eines jeweils eine Becherstange an deren Längsseite erfassenden Saugorgans offenbart. Hierbei ist - wie vorstehend ausgeführt - insbesondere als nachteilig anzusehen, dass durch das offenbarte waagerechte Befüllen der Kartons mit Becherstangen eine optimale Packungsdichte in der Regel nicht erreicht wird. Aufgrund des auftretenden Kraftschlusses zwischen Bechern und Saugorgan sowie aufgrund des Eigengewichtes der Becherstangen, durch die die unteren Lagen im Karton stark belastet werden, ist die offenbarte Vorrichtung insbesondere zum Handhaben noch warmer, verformbarer Becher nicht geeignet. Zudem ist das Saugorgan der DE 40 30 215 C2 nur für Becherstangen fester Länge einsetzbar.

Die DE 35 41 900 A1 offenbart ein Verfahren und eine Vorrichtung zum lagenweisen Versetzen von gleichgroßen Stangen, wobei ein Greifer mit einem Greifbügel eine Mehrzahl von parallel liegenden Becherstangen form- bzw. kraftschlüssig umfasst und diese liegend in Kartons ablegt. Somit ergeben sich im Wesentlichen dieselben Nachteile, wie vorstehend hinsichtlich der DE 40 30 215 C2 ausgeführt.

Aus der DE 37 41 257 A1 ist eine Greifvorrichtung, insbesondere für liegende Kunststoffbecher-Steckstapel, bekannt. Auch hier werden die Becherstangen übereinander liegend in Ladehilfsmitteln angeordnet. Zudem weist die offenbarte Greifvorrichtung mindestens ein Zangenteil, und ein mit diesem zusammen wirkendes Anlageteil auf, durch die die Steckstapel an ihrer Mantelaußenfläche nach Art einer Greifzange umfasst werden. Auch hier ergeben sich die vorstehend genannten Nachteile.

Schließlich zeigt die DE 34 24 233 C2 eine Vorrichtung zum Befüllen von Kartons, bei der Becherstangen mittels einer Greifeinrichtung in nicht näher bezeichneter Weise liegend in Kartons abgelegt werden. Somit treten auch hier zumindest die oben genannten Nachteile auf.

Der Erfindung liegt die Aufgabe zugrunde, ein Verfahren und eine Vorrichtung der eingangs genannten Art dahingehend weiterzubilden, dass ein vollautomatisches Handhaben von stabförmigen Objekten, insbesondere Becherstangen, Ein- und Auspacken in Verbindung mit einem Ladehilfsmittel, wie einem Karton, möglich ist. Dabei soll das erfindungsgemäße Verfahren bzw. die erfindungsgemäße Vorrichtung auch bei sich ändernden Durchmessern der zu handhabenden Objekte flexibel und mit geringer Ausfallzeit einsetzbar sein, wobei zudem die Packungsdichte der Objekte innerhalb der Ladehilfsmittel optimiert wird.

Die vorstehend genannte Aufgabe wird mit einem Verfahren der eingangs genannten Art dadurch gelöst, welches die kennzeichnenden Merkmale des Anspruchs 1 aufweist. Weiter wird die Aufgabe durch eine Vorrichtung mit den kennzeichnenden Merkmalen des Anspruchs 21 gelöst.

Bei den erfindungsgemäß gehandhabten Objekten handelt es sich insbesondere um einzelne, separate Objekte, die formschlüssig verbindbar, vorzugsweise ineinander stapelbar sind und sich allerdings auch verhaken können. Durch das Ergreifen werden die Objekte bei weiterer Bewegung geführt und damit aus einer vorgegebenen Position entlang einer definierten Bahn bewegt, wobei insbesondere die Orientierung der Objekte an jedem Punkt definiert ist. Nach dem Ergreifen werden die Objekte weiter gehalten und damit zumindest vorübergehend in einer bestimmten Position und Orientierung gesichert. Im Rahmen der Erfindung werden die Objekte in radialer Richtung bewegt, und zwar im Zuge der Abstandsänderung oder der relativen Lageänderung derselben, nicht aber in Längsrichtung. Insgesamt wird die Lageänderung so absolut definiert durchgeführt.

Mit dem erfindungsgemäßen Verfahren bzw. der erfindungsgemäßen Vorrichtung können erstmalig Becherstangen vollautomatisch in Verbindung mit einem nur einseitig geöffneten Ladehilfsmittel gehandhabt werden, wobei die Behandlung der Becher, insbesondere durch das aufrecht stehende Ablegen mit weitgehend senkrechter Ausrichtung der Becher bzw. Becherstangen, eine sehr schonende ist. Die Objekte werden an ihren Mantelflächen von den Haltestangen umschlossen und ein Sicherungsmechanismus greift aus einer weiteren Stirnfläche ein. Die Objekte werden unmittelbar von der Ausgangseinheit an eine Handhabungseinheit übergeben, die also in direktem Kontakt stehen, ohne dass eine zwischengeschaltete Stapelvorrichtung notwendig ist. Dabei können nicht nur die Objekte in die Handhabungseinheit geschoben werden, sondern letztere in die Ausgangseinheit. Hierdurch erfolgt ein Ineinanderfahren und damit eine "Verzahnung" der Einheiten, wodurch eine absolut sichere Übergabe der Objekte sichergestellt ist. Aufgrund der erfindungsgemäßen Ausrichtung der Becheranordnung ist darüber hinaus eine Optimierung der in dem Ladehilfsmittel aufnehmbaren Objekt- bzw. Becherzahl möglich. Erfindungsgemäß ist eine Anordnung der Objekte mit einer hohen Packdichte und damit einer hohen Kompaktheit erreichbar.

Insbesondere sind bei der Erfindung auch die folgenden Gegebenheiten vorhanden:

Die Objekte stellen.einen biegsamen losen Verbund aus einzelnen Artikeln dar. Die Objekte können an ihrer Mantelfläche umschlossen werden, wie mittels der am Umfang angeordneten Haltestangen. Die Objekte können "verzahnt" werden, d.h. der Mittelpunktabstand kann geringer als der doppelte Radius sein. Die eigentliche Sicherung der Objekte während des Handhabungsvorgangs erfolgt stirnseitig und zwar an der dem Greiferzentrum/-schwerpunkt entgegen gerichteten "unteren" Stirnseite. Hieraus folgt: Die Objekte werden bei dem erfindungsgemäßen Verfahren formschlüssig gegriffen. Das Greifsystem kann direkt an die Ursprungseinheit angedockt werden. Darüber hinaus bietet es die Möglichkeit, in die ursprüngliche Einheit (Haltevorrichtung) geschoben zu werden, d.h. es wird nicht nur angedockt. Es ist möglich, einen beliebigen Teil der Ladung eines Ladehilfsmittels zu handhaben, nicht nur z.B. eine Reihe von Objekten.

In bevorzugter Weiterbildung des erfindungsgemäßen Verfahrens ist vorgesehen, dass die erste Greifeinrichtung durch ein Handhabungsgerät, insbesondere Mehrachs-Industrieroboter, betätigt wird, wodurch eine besonders flexible Einsetzbarkeit der Greifeinrichtung möglich ist. Entsprechend ist bei einer erfindungsgemäßen Vorrichtung vorgesehen, dass die erste Greifeinrichtung durch ein Handhabungsgerät, insbesondere einen Mehrachs-Industrieroboter, betätigbar ist. Bevorzugt wird ein Vier- oder Sechsachs-Industrieroboter eingesetzt. Auch der Einsatz eines Industrieroboters mit einer anderen Anzahl an Achsen ist möglich.

Zweck einer weiteren Optimierung der Anordnungsdichte im Ladehilfsmittel richtet sich ein Hauptaugenmerk der vorliegenden Erfindung auf die Anpassung der ersten, ursprünglichen geometrischen Anordnung der Objekte vor dem Ablegen derselben in dem Ladehilfsmittel. Dies kann erfindungsgemäß auf zweierlei Arten erfolgen, wobei allerdings auch eine Mischform möglich ist:

Im Rahmen der Erfindung ist deshalb zum einen vorgesehen, dass die Objekte mittels einer ersten Greifeinrichtung ergriffen werden und dass die Veränderung der Objektanordnung über ein Ändern einer Geometrie der ersten Greifeinrichtung erfolgt. Die Objekte werden vor dem Ablegen in das Ladehilfsmittel in zugeordnete Speicherelemente von Magazinmitteln abgelegt, wobei in den Magazinmitteln eine Anordnungsgeometrie der Objekte verändert wird. Entsprechend ist in Weiterbildung die erfindungsgemäße Vorrichtung so eingerichtet, dass die erste Greifeinrichtung zu einem Ändern der Geometrie der Objektanordnung vor einem Ablegen in das Ladehilfsmittel ausgebildet ist bzw. dass die Magazinmittel zum Ändern der Geometrie der Objektanordnung ausgebildet sind.

Zwecks einer flexiblen Veränderbarkeit der Geometrie der ersten Greifeinrichtung wird vorzugsweise jedes Objekt einer (Teil-)Kavität durch ein zugeordnetes Greifelement der ersten Greifeinrichtung ergriffen und gehalten. Gemäß einer Weiterbildung der erfindungsgemäßen Vorrichtung weist diese deshalb in der ersten Greifeinrichtung für jedes Objekt ein zugeordnetes Greifelement auf. Entsprechend der zweiten o.g. Ausgestaltungsform können auch die Magazinmittel für jedes Objekt ein zugeordnetes Speicherelement aufweisen.

Da es sich bei den zu handhabenden stabförmigen Objekten insbesondere nicht um starre Gegenstände handelt, weisen die Greifelemente und/oder die Speicherelemente nach einer Weiterbildung der erfindungsgemäßen Vorrichtung vorzugsweise seitliche Führungselemente für das jeweils gehaltene Objekt auf, in die darüber hinaus zumindest im Fall der Greifelemente Verschlussmittel zum Halten der Objekte integriert sein können. Um eine möglichst genaue und platzsparende Ablage der Objekte zu ermöglichen, sieht eine äußerst bevorzugte Weiterbildung der erfindungsgemäßen Vorrichtung vor, dass die Führungsmittel zum parallelen Ausrichten von Stabachsen der Objekte ausgebildet sind.

Um eine optimale Packungsdichte im Ladehilfsmittel erreichen zu können, ist weiterhin vorgesehen, dass zumindest eine Gruppe von Greifelementen in einer Reihe angeordnet ist. Entsprechend ist hinsichtlich der Magazinmittel vorgesehen, dass diese zum Aufnehmen der Objekte mit parallelen Stabachsen in einer Anordnung von Reihen ausgebildet sind, wobei zumindest eine Gruppe von Speicherelementen in einer Reihe angeordnet ist.

Vorrichtungstechnisch ist aus dem genannten Grund weiterhin vorgesehen, dass zumindest die in einer Reihe angeordneten Greifelemente und/oder Speicherelemente der betreffenden Gruppe beweglich angeordnet sind, vorzugsweise in einer Richtung senkrecht zur Stabachse der jeweils gehaltenen Objekte, so dass im Zuge des erfindungsgemäßen Verfahrens die angestrebte Änderung der Geometrie der ersten Objektanordnung durch Änderung eines Abstands der Greifelemente und/oder der Speicherelemente erfolgen kann.

Die Greif- und/oder Speicherelemente können hierzu gleitend auf einem Schienenelement angeordnet sein, das sich in Richtung der Reihe erstreckt, wobei nach einer äußerst bevorzugten Weiterbildung der erfindungsgemäßen Vorrichtung ein seitlicher Abstand der Greif- und/oder Speicherelemente voneinander innerhalb der Reihe veränderbar ist. Verfahrenstechnisch sieht eine entsprechende Weiterbildung der Erfindung vor, dass die Abstandsänderung zwischen einer ersten, beim Ergreifen der Objekte vorgegebenen Stellung und einer zweiten, durch eine angestrebte Packungsdichte in dem Ladehilfsmittel vorgegebenen Stellung der Greifelemente bzw. der Speicherelemente zueinander erfolgt.

Um die erfindungsgemäß vorzugsweise mögliche Veränderung des seitlichen Abstands zwischen Objekten einer Reihe zwischen den beiden genannten, vorgegebenen Stellungen in konstruktiv einfacher Weise zu realisieren, sieht eine äußerst bevorzugte Ausgestaltung der erfindungsgemäßen Vorrichtung vor, dass die Greif- und/oder Speicherelemente der Gruppe mit dem bzw. den jeweils benachbarten Greif- und/oder Speicherelement(en) über Verbindungsmittel verbunden sind, durch zwei relative Stellungen mit zwei unterschiedlichen paarweisen seitlichen Abständen der Greif- und/oder Speicherelemente untereinander definiert sind. Mittels der genannten Verbindungsmittel wird eine seitliche Bewegung eines Greif- und/oder Speicherelementes der Gruppe innerhalb bestimmter vorgegebener Grenzen auf die anderen Greif- und/oder Speicherelemente der Gruppe übertragbar, so dass vorzugsweise eine einzelne Kraftquelle zum Bewegen der Greif- und/oder Speicherelemente für jede Gruppe von Greif- und/oder Speicherelementen ausreicht.

Um die erfindungsgemäß angestrebte optimale Packungsdichte im Ladehilfsmittel auch bzw. insbesondere unabhängig von einer geometrischen Anordnung der Becher bzw. Becherstangen in der Kavität realisieren zu können, wird es im allgemeinen erforderlich sein, die in dem Ladehilfsmittel abzulegende geometrische Anordnung der Objekte praktisch vollständig unabhängig von der Anzahl und Anordnungsgeometrie der bereitgestellten Objekte/Kavität zusammenzustellen. Zu diesem Zweck weist die erfindungsgemäße Vorrichtung - wie vorstehend beschrieben - entweder eine erste Greifeinrichtung mit beweglichen Greifelementen oder (gegebenenfalls auch zusätzlich) Magazinmittel mit beweglichen Speicherelementen zum Ablegen der in der ersten Greifeinrichtung enthaltenen Objekte auf. Verfahrenstechnisch ist entsprechend vorgesehen, dass die Objekte vor dem Ablegen in das Ladehilfsmittel entweder mit bereits veränderter Geometrie ihrer Anordnung in Magazinmittel abgelegt werden oder dass die Geometrie-Anpassung erst in den Magazinmitteln durch bewegliche Speicherelemente derselben vorgenommen wird. Wie bereits erwähnt, ist jedoch auch eine Mischform der beiden vorstehend genannten Verfahrensarten möglich. Ebenfalls können die Objekte auch nach Geometrieänderung in der ersten Greifeinrichtung direkt aus dieser in das Ladehilfsmittel abgelegt werden.

Im Hinblick auf das Ablegen der Objekte in das Ladehilfsmittel werden die Objekte in Form einer zweiten Anordnung mittels einer zweiten Greifeinrichtung aus den Magazinmitteln entnommen, so dass vorzugsweise eine erfindungsgemäße Vorrichtung eine zweite Greifeinrichtung zum Entnehmen einer zweiten geometrischen Anordnung der Objekte aus den Magazinmitteln aufweist. Diese ist aus Gründen eines schnellen Verfahrensablaufes sowie im Hinblick auf das Erreichen einer optimalen Packungsdichte im Ladehilfsmittel vorzugsweise zum reihen- oder blockweisen Entnehmen der Objekte aus dem Magazinmittel ausgebildet. Verfahrenstechnisch sieht eine entsprechende Weiterbildung der Erfindung vor, dass die Entnahme aus den Magazinmitteln reihen- oder blockweise erfolgt. Vorzugsweise entspricht demgemäß eine Länge der Reihen einer Abmessung des Ladehilfsmittels.

Analog zur ersten Greifeinrichtung wird auch die zweite Greifeinrichtung vorzugsweise durch ein Handhabungsgerät, insbesondere einen Mehrachs-Industrieroboter, betätigt. Es ist im Rahmen einer entsprechenden Weiterbildung des erfindungsgemäßen Verfahrens auch möglich, dass die Greifeinrichtung durch ein gemeinsames Handhabungsgerät, insbesondere ein Mehrachs-Industrieroboter, betätigt werden. Allerdings ist auch ein Betätigen der Greifeinrichtungen durch unterschiedliche Handhabungsgeräte möglich.

Wenn die zweite Greifeinrichtung bewegliche Greifelemente aufweist, kann auch hier noch eine (gegebenenfalls zusätzliche) Geometrieänderung der Objektanordnung vor dem Ablegen der Objekte in das Ladehilfsmittel erfolgen.

Um die in dem Ladehilfsmittel abgelegten Objekte in sicherer und schonender Weise, auch im Zuge von Transportbewegungen, an ihrem zugedachten Platz zu halten, sieht eine äußerst bevorzugte Weiterbildung des erfindungsgemäßen Verfahrens vor, dass in das Ladehilfsmittel vor dem Ablegen der Objekte eine Positionierungseinlage eingebracht wird. Entsprechend weist eine erfindungsgemäße Vorrichtung vorzugsweise eine in dem Ladehilfsmittel angeordnete Positionierungseinlage auf, die darüber hinaus in äußerst bevorzugter Weise am Boden des Ladehilfsmittels angeordnet ist. Das Vorsehen einer Positionierungseinlage ist insbesondere dann vorteilhaft, wenn das Packmuster der Objekte innerhalb des Ladehilfsmittels beim Transport verändert werden könnte, beispielsweise durch Verrutschen. Inwiefern die Positionierungseinlage am Boden der Ladehilfsmittel vorzusehene ist, hängt vom konkreten Anwendungsfall ab. Eine mögliche alternative Anordnung besteht in einer vertikal angeordneten Positionierungseinlage in Form einer Trenn-Schottwand.

Zum Aufnehmen der Objekte weist die Positionierungseinlage gemäß einer äußerst bevorzugten Weiterbildung der erfindungsgemäßen Vorrichtung Aufnahmemittel für die Objekte auf, die zum dauerhaften Beabstanden der Objekten von einer wenigstens einer Wand des Ladehilfsmittels ausgebildet sind. Die Aufnahmemittel können erfindungsgemäß so ausgebildet bzw. angeordnet sein, dass die Objekte mit einem ihrer Stabenden in die Aufnahmemittel einbringbar sind, wobei eine bevorzugte Weiterbildung des erfindungsgemäßen Verfahrens vorsieht, dass die Objekte mit zueinander parallelen Stabachsen mit einem ihrer Stabenden in Aufnahmemittel der Positionierungseinlage eingebracht werden. Dabei ist vorzugsweise darauf zu achten, dass die Objekte durch die Positionierungseinlage zumindest von einer Wand des Ladehilfsmittels dauerhaft beabstandet positioniert werden. Vorzugsweise ist die Positionierungseinlage dabei derart ausgebildet, dass ein abgelegtes Objekt noch unterfahren werden kann, z.B. durch einen Gabelgreifer, so dass auch Becherstangen, bei denen die Becheröffnungen jeweils nach unten (zum Boden des Ladehilfsmittels) zeigen, automatisiert aus dem Ladehilfsmittel entnommen werden können.

Da das erfindungsgemäße Verfahren bzw. die erfindungsgemäße Vorrichtung neben dem bereits vorstehend grundsätzlich beschriebenen Einpacken der Objekte auch ein vollautomatisches Auspacken derselben aus einem Ladehilfsmittel ermöglichen soll, ist im Rahmen einer bevorzugten Weiterbildung des erfindungsgemäßen Verfahrens vorgesehen, dass zumindest eine Reihe von Objekten zusätzlich von einer sich parallel zu ihren Stabachsen erstreckenden Wand des Ladehilfsmittels zum Einbringen einer Entnahmeeinrichtung in einen Bereich zwischen der Objektreihe und der Wand beabstandet positioniert wird. Entsprechend sind bei einer erfindungsgemäßen Vorrichtung vorzugsweise die Aufnahmemittel für zumindest eine Reihe von Objekten demgemäß und vorzugsweise gemäß einer optimalen Packungsdichte der Objekte angeordnet. Verfahrenstechnisch kann also das Ablegen in das Ladehilfsmittel dergestalt erfolgen, dass eine optimale Packungsdichte der Objekte erreicht wird.

Ein Entnehmen der in dem Ladehilfsmittel abgelegten Objekte ist beispielsweise im Zuge einer Weiterbildung des erfindungsgemäßen Verfahrens erstrebenswert bzw. erforderlich, bei der die Ladehilfsmittel nach dem Ablegen der Objekte zu einer Weiterbearbeitung der Artikel, wie Dekorieren oder Befüllen, gefördert werden, wozu eine erfindungsgemäße Vorrichtung vorzugsweise Fördermittel zum Fördern der Ladehilfsmittel zu einer Weiterbearbeitungseinrichtung für die Artikel, z.B. eine Dekorier- oder Befülleinrichtung aufweist. Vorzugsweise besitzt dann die erfindungsgemäße Vorrichtung eine weitere Greifeinrichtung samt Handhabungsgerät zu ihrer Betätigung, vorzugsweise einem Industrieroboter, zum Entnehmen der Objekte (Entnahmeeinrichtung) aus dem Ladehilfsmittel, die in Analogie zu der zweiten Greifeinrichtung vorzugsweise zum reihenweisen Entnehmen der Objekte aus dem Ladehilfsmittel ausgebildet ist. Verfahrenstechnisch sehen entsprechende Weiterbildungen des erfindungsgemäßen Verfahrens vor, dass die Objekte für eine Weiterbearbeitung der Artikel mittels einer weiteren Greifeinrichtung (Entnahmeeinrichtung) aus dem Ladehilfsmittel entnommen werden, wobei die Entnahme vorzugsweise reihenweise erfolgt.

Alternativ können die gefüllten Ladehilfsmittel auch einer Lagereinrichtung zugeführt und dort gelagert werden.

Im Hinblick auf die erfindungsgemäß hochgradig dichte und platzsparende Packung der Objekte in dem Ladehilfsmittel sieht eine erste Weiterbildung der erfindungsgemäßen Vorrichtung vor, dass die Entnahmeeinrichtung für jedes zu entnehmende Objekt eine Klemmeinrichtung aufweist, die aus einem Untergreifmittel zum Untergreifen des Objektes und einem Niederhaltemittel zum Einklemmen des Objektes zwischen Untergreifmittel und Niederhaltemittel gebildet ist, so dass die Objekte durch die untergreifenden Objekte mittels eines Untergreifmittels und Einklemmen zwischen Untergreifmittel und einem Niederhaltemittel aus dem Ladehilfsmittel entnommen werden können. Alternativ kann vorgesehen sein, dass die Entnahmeeinrichtung für jedes zu entnehmende Objekt eine Schalenanordnung aus wenigstens zwei zum Aufnehmen des Objekts relativ zueinander um eine gemeinsame Achse rotierbare Teilschalen aufweist, wobei das Objekt in einem innerhalb der Schalenanordnung ausgebildeten Raum aufnehmbar ist und durch an einem Ende der Schalenanördnung vorgesehenen Haltemittel in diesem gehalten ist. Vorzugsweise sind die Entnahmeeinrichtungen in einem Bereich zwischen der Wand des Ladehilfsmittels und der Objektreihe einbringbar, der aufgrund einer entsprechenden Ausgestaltung der erfindungsgemäßen Positionierungseinlage dauerhaft offen gehalten ist.

Nach erfolgter weiterbearbeitung der Artikel werden die Objekte im Zuge einer bevorzugten Weiterbildung des erfindungsgemäßen Verfahrens wieder in das Ladehilfsmittel abgelegt, wobei es im Rahmen einer besonderen Weiterbildung des erfindungsgemäßen Verfahrens möglich ist, dass die Objekte durch ein gemeinsames Handhabungsgerät, insbesondere ein Mehrachs-Industrieroboter, aus dem Ladehilfsmittel entnommen und wieder darin abgelegt werden. Eine entsprechende Variante der erfindungsgemäßen Vorrichtung zeichnet sich dadurch aus, dass die Objekte nach erfolgter Weiterbearbeitung.der Artikel mittels einer weiteren, insbesondere der Einnahmeeinrichtung entsprechenden, Greifeinrichtung wieder in das Ladehilfsmittel ablegbar sind.

Damit sich die Objekte bereits während des Ablegens in das Ladehilfsmittel - sei es nach ihrer Herstellung oder nach einer Weiterverarbeitung - auch bei noch nicht vollständiger Füllung desselben gegenseitig stützen können, kann verfahrenstechnisch weiterhin vorgesehen sein, dass das Ladehilfsmittel während des Ablegens der Objekte gegen die Vertikale geneigt wird. Das Neigen der Ladehilfsmittel geschieht bei einer erfindungsgemäßen Vorrichtung in einer auch zu diesem Zweck vorgesehenen Spreizstation, die darüber hinaus vorrangig und vorzugsweise dafür vorgesehen ist, eine in dem Ladehilfsmittel vorhandene Auskleidung, insbesondere einen Kunststoffbeutel, während des Ablegens der Objekte auszubreiten und gleichzeitig an die Wände des Ladehilfsmittels anzulegen. Dadurch wird gewährleistet, dass sich beim Einfahren der Einpack- bzw. Auspack-Greifeinrichtung keine Kollisionspunkte mit der Auskleidung des Ladehilfsmittels ergeben, da dies insbesondere zu einer Beschädigung der Auskleidung und zu einer anschließenden hygienischen Beeinträchtigung der Objekte führen können. Eine weitere Aufgabe der Spreizstation ist das exakte Positionieren des Ladehilfsmittels beim Be- und Entladen.

Weiterbildungen der erfindungsgemäßen Vorrichtung sehen vor, dass die Entnahmeeinrichtung durch ein Handhabungsgerät, insbesondere einen Mehrachs-Industrieroboter, betätigbar ist. Analog kann auch die weitere Greifeinrichtung durch ein entsprechendes Handhabungsgerät-betätigbar sein. Im Falle einer geeigneten Taktung der Weiterbearbeitungseinrichtung, beispielsweise hinsichtlich Arbeitstakt oder einer geometrischen Ausgestaltung des Arbeitsbereiches, ist es auch möglich, die Entnahmeeinrichtung und die weitere Greifeinrichtung durch ein gemeinsames Handhabungsgerät, insbesondere einen Mehrachs-Industrieroboter, zu betätigen. Verfahrenstechnisch kann hierbei entsprechend vorgesehen sein, dass die Objekte durch ein erstes Handhabungsgerät, insbesondere einen Mehrachs-Industrieroboter, aus dem Ladehilfsmittel entnommen und - nach erfolgter Weiterbearbeitung - durch ein zweites Handhabungsgerät, insbesondere einen Mehrachs-Industrieroboter, wieder darin abgelegt werden.

Im Falle einer Verwendung von zwei Handhabungsgeräten an der Weiterbearbeitungseinrichtung besitzt eine erfindungsgemäße Vorrichtung vorzugsweise Fördermittel zum Fördern der Ladehilfsmittel in einem festen Kreislauf nach einem FIFO-(first-in-first-out-)Prinzip aus einem Arbeitsbereich des ersten Handhabungsgeräts in einen Arbeitsbereich des zweiten Handhabungsgeräts während der Weiterbearbeitung der Artikel. Verfahrenstechnisch werden dementsprechend die Ladehilfsmittel während der Weiterbearbeitung der Artikel in dem genannten Kreislauf von dem einen zu dem anderen Handhabungsgerät gefördert.

Weitere Eigenschaften und Vorteile der Erfindung ergeben sich aus den Patentansprüchen sowie der nachfolgenden Beschreibung von Ausführungsbeispielen anhand der Zeichnung. Es zeigt:
- Fig. 1: eine schematische Darstellung einer Ausgestaltung der erfindungsgemäßen Vorrichtung im Bereich der Herstellung und Verpackung von Kunststoffbechern;
- Fig. 2: schematische Darstellungen der Übernahme von Becherstangen durch eine erste Greifeinrichtung der Vorrichtung;
- Fig. 3a, b, c: Detaildarstellungen einer Reihe von Greifelementen der ersten Greifeinrichtung bzw. entsprechenden Speichermitteln in den Magazinmitteln;
- Fig. 4: eine detaillierte Gesamtansicht der ersten Greifeinrichtung;
- Fig. 5a, b, c: weitere schematische Detailansichten von erfindungsgemäßen Greifelementen;
- Fig. 6a: schematische Darstellungen der Ablage und Entnahme von Objekten in bzw. aus den Magazinmitteln;
- Fig. 6b: schematische Darstellung einer Seitenansicht gemäß der Fig. 6a;
- Fig. 7a, b: schematische Darstellungen möglicher Objektpackungen im Ladehilfsmittel;
- Fig. 8: schematische Darstellungen einer weiteren Verfahrensweise zum Ablegen von Objekten im Magazinmittel;
- Fig. 9: schematische Darstellungen zum reihenweisen Absetzen von Objekten im Ladehilfsmittel;
- Fig. 10: eine schematische Teilansicht einer Ausgestaltung der erfindungsgemäßen Vorrichtung im Bereich einer Weiterbearbeitungsstation für die Artikel;
- Fig. 11a: schematische Ansichten einer erfindungsgemäßen Positionierungseinlage;
- Fig. 11b: Teilansichten einer erfindungsgemäßen Positionierungseinlage mit auf dieser angeordneten Objekten;
- Fig. 11c: eine perspektivische Ansicht eines Aufnahmemittels der Positionierungseinlage;
- Fig. 12: schematische Darstellungen einer ersten Entnahmeeinrichtung für im Ladehilfsmittel abgelegte Objekte der erfindungsgemäßen Vorrichtung sowie eines mit Hilfe der Entnahmeeinrichtung durchgeführten Entnahmevorgangs;
- Fig. 13a: eine weitere Ausgestaltung der Entnahmeeinrichtung in perspektivischer Gesamtansicht;
- Fig. 13b: Detaildarstellungen einer Schalenanordnung und der Teilschalen der Entnahmeeinrichtung der Fig. 13a;
- Fig. 13c: eine Schnittdarstellung entlang der Linie C-C in Fig. 13b;
- Fig. 14a, b: Schnittansichten entlang der Linie A-A in Fig. 13b im geöffneten bzw. im geschlossenen Zustand der Schalenanordnung;
- Fig. 15a-c: schematische Darstellungen einer Ausgestaltung und Funktionsweise einer Spreizstation der erfindungsgemäßen Vorrichtung; und
- Fig. 16: eine schematische Darstellung einer Ausgestaltung von Magazinmitteln im Bereich einer weiterbearbeitung der Artikel.

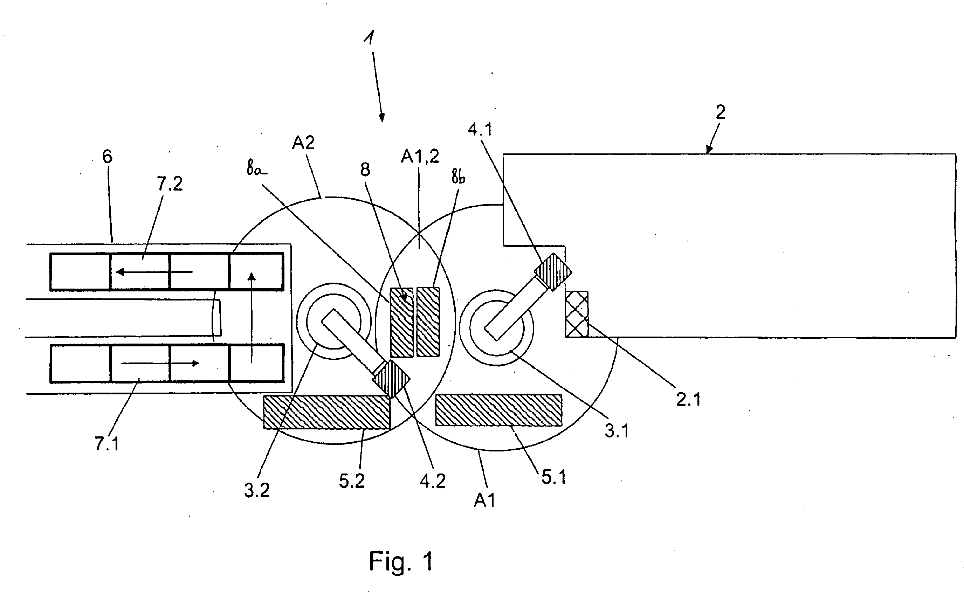

Die Fig. 1 zeigt schematisch eine Teilansicht der erfindungsgemäßen Vorrichtung 1 im Bereich der Herstellung zu handhabender Artikel bzw. daraus gebildeter stabförmiger Objekte, hier speziell der Herstellung von Kunststoffbechern für die Molkereiindustrie. Mittels der gezeigten Ausgestaltung der Vorrichtung lassen sich ohne Rüsten Becher mit zwei unterschiedlichen Durchmessern handhaben. Die erfindungsgemäße Vorrichtung 1 weist zu diesem Zweck eine Herstellungseinrichtung 2 für die Kunststoffbecher in Form eines Tiefziehautomaten auf. Im Bereich der Herstellungseinrichtung 2 sind zwei Handhabungsgeräte 3.1, 3.2 in Form von Mehrachs-Industrierobotern, vorzugsweise Vier- bis Sechs-Achs-Industrierobotern, vorgesehen, die jeweils mit einer Greifeinrichtung 4.1, 4.2 ausgestattet sind. In den Arbeitsbereichen A1, A2 der Handhabungsgeräte 3.1, 3.2 sind Werkzeugbahnhöfe 5.1, 5.2 vorgesehen, an denen die Handhabungsgeräte 3.1, 3.2 ihre jeweiligen Greifeinrichtung 4.1, 4.2 zur Anpassung an einen bestimmten Becherdurchmesser wechseln können. Die Werkzeugbahnhöfe 5.1, 5.2 sind speziell für den eingangs erwähnten Fall vorgesehen, dass zwei unterschiedliche Becherdurchmesser vorhanden sind. Andernfalls kann auf zumindest einen Werkzeugbahnhof verzichtet werden. Weiterhin ist im Arbeitsbereich A2 des Handhabungsgeräts 3.2 ein Fördermittel 6 zum Fördern von leeren und befüllten Ladehilfsmitteln 7.1 bzw. 7.2, beispielsweise in Form von Kartons, angeordnet.

Die Arbeitsbereiche A1, A2 der Handhabungsgeräte 3.1, 3.2 überschneiden sich in einem Teilbereich A1,2. In diesem sind gemäß der Ausgestaltung der Fig. 1 Magazinmittel 8, im konkreten Fall in Form von zwei Magazineinheiten 8a, 8b für unterschiedliche Becherdurchmesser, zur temporären Aufnahme der zu handhabenden Objekte angeordnet. Hierdurch entfällt bei einem Formatwechsel das Rüsten.

Der grundsätzliche Ablauf des erfindungsgemäßen Verfahrens, soweit dieses anhand der Darstellung der Fig. 1 beschreibbar ist, stellt sich wie folgt dar: Die Herstellungseinrichtung 2 stellt in bekannter Weise die zu handhabenden Kunststoffbecher aus PP oder PS in einem Thermo-Ziefziehverfahren her. Dazu wird eine extrudierte Folie der Herstellungseinrichtung zugeführt (nicht gezeigt) und in dieser erhitzt. Anschließend wird die thermoelastische Folie in der Herstellungseinrichtung durch Vorstrecker vorgeformt und mittels Druckluft in eine Form gepresst, anschließend abgekühlt und ausgestanzt. Die so herstellten Becher werden noch in der Herstellungseinrichtung 2 zu Becherstangen ineinandergestapelt und anschließend in einem Ausgabebereich 2.1 der Herstellungseinrichtung 2 bereitgestellt.

Vom Ausgabebereich 2.1 werden die Becherstangen erfindungsgemäß durch das erste Handhabungsgerät 3.1 mittels der ersten Greifeinrichtung 4.1 in einer ersten geometrischen Anordnung, die auch als Kavität bezeichnet wird und eine einoder zweidimensionale Ausgestaltung aufweisen kann, entnommen und den Magazinmitteln 8 zugeführt, wo sie temporär abgelegt werden. Im Falle geänderter Becherabmessungen und daraus resultierender geänderter Abmessungen der Becherstangen im Ausgabebereich 2.1 der Herstellungseinrichtung fährt das Handhabungsgerät 3.1 den ihm zugeordneten Werkzeugbahnhof 5.1 an und erhält dort gegebenenfalls eine neue. Greifeinrichtung, mittels derer es das erfindungsgemäße Verfahren, soweit bisher dargestellt, auch bei veränderten Objektparametern wiederholen kann.

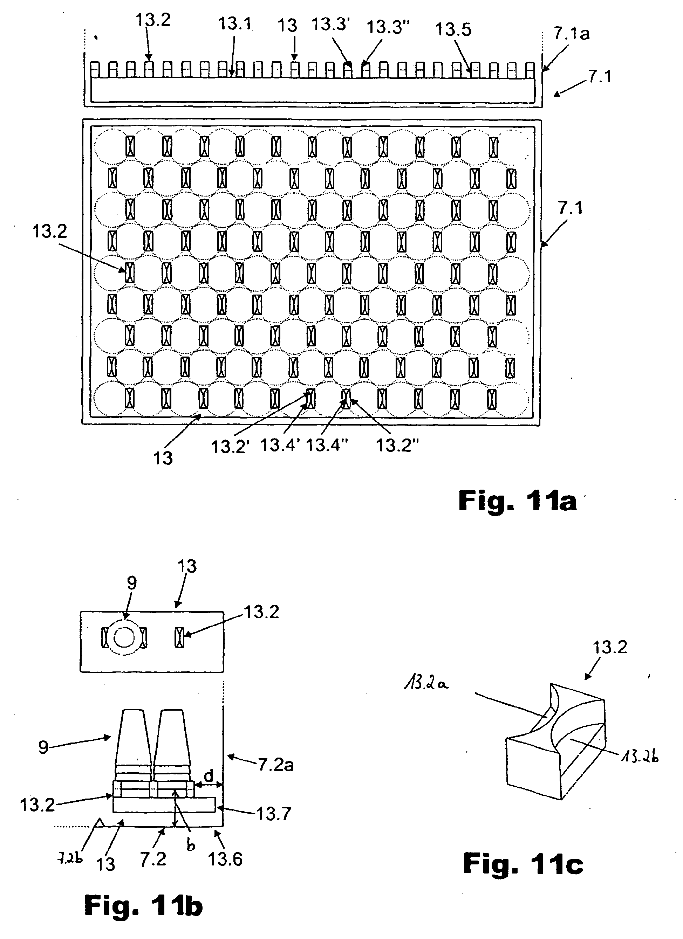

Nachdem das erste Handhabungsgerät 3.1 die der Herstellungseinrichtung 2 entnommenen Objekte in den Magazinmittel 8 abgelegt hat, werden sie von dort durch das zweite Handhabungsgerät 3.2 mittels der von ihm betätigten zweiten Greifeinrichtung 4.2 wieder entnommen und in ein durch das Fördermittel 6 in den Arbeitsbereich A2 des Handhabungsgeräts 3.2 hinein gefördertes leeres Ladehilfsmittel 7.1 abgelegt. Ist das Ladehilfsmittel 7.1 gefüllt, wird es durch das Fördermittel 6 als volles Ladehilfsmittel 7.2 wieder aus dem Arbeitsbereich A2 des zweiten Handhabungsgeräts 3.2 heraus gefördert und steht gegebenenfalls einer Weiterbearbeitung (vgl. Fig. 11) zur Verfügung.

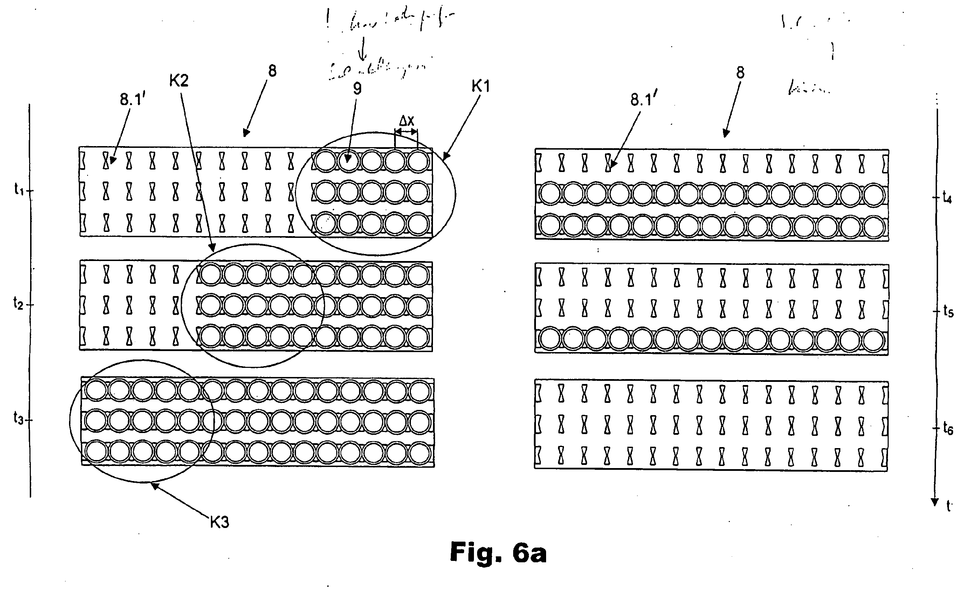

Wie in der Darstellung der Fig. 1 schematisch angedeutet, weisen der Ausgabebereich 2.1 der Herstellungseinrichtung 2 und die Magazinmittel 8 unterschiedliche geometrische Formate auf. Erfindungsgemäß werden die am Ausgabebereich 2.1 der Herstellungseinrichtung 2 mit einer ersten geometrischen Anordnung entnommenen Objekte durch die Greifeinrichtung 4.1 des ersten Handhabungsgeräts 3.1 segmentweise in den Magazinmitteln 8 abgelegt. Anschließend werden in den Magazinmitteln 8 die Abstände der Objekte verändert, was nachfolgend noch detailliert dargestellt ist. Die so geschaffene zweite Anordnung der Objekte ist dabei derart gestaltet, dass das zweite Handhabungsgerät 3.2 anschließend mittels seiner Greifeinrichtung 4.2 eine optimale Packungsdichte der Objekte in dem Ladehilfsmittel 7.1 erzielen kann. Dies wird anhand der Fig. 6a, 6b, 8 und 9 im Weiteren noch detailliert dargestellt. Alternativ oder zusätzlich erfolgt die Änderung der Anordnungsgeometrie durch die erste Greifeinrichtung 4.1, und die Objekte werden in einer durch die Greifeinrichtung 4.1 des ersten Handhabungsgeräts 3.1 geänderten zweiten Anordnung in den Magazinmitteln 8 abgelegt.

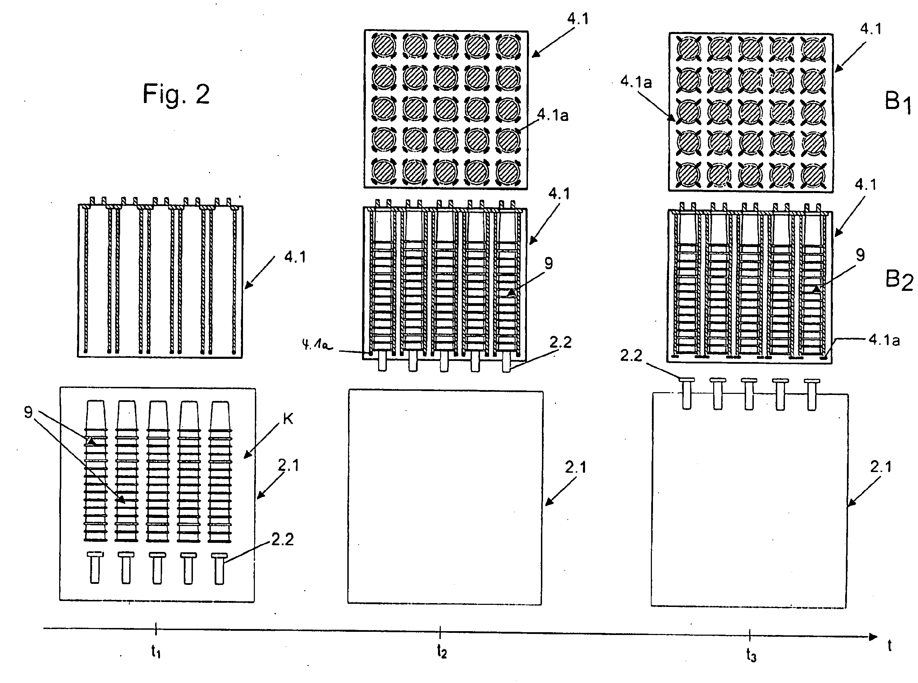

Die Fig. 2 zeigt schematisch die Aufnahme zu handhabender Objekte in Form von Becherstangen 9 durch die erste Greifeinrichtung 4.1. Im unteren Teil der Abbildung ist der Ausgabebereich 2.1 der Herstellungseinrichtung 2 (Fig. 1) zu verschiedenen, aufeinander folgenden Zeitpunkten t₁, t₂, t₃ während des Ablaufs des erfindungsgemäßen Verfahrens dargestellt. Der mittlere Bereich B₁ zeigt seitliche Schnittansichten der Greifeinrichtung 4.1 zu denselben Zeitpunkten t₁-t₃, während im oberen Bereich B₂ Draufsichten auf die Greifeinrichtung 4.1 zu den Zeitpunkten t₂, t₃ dargestellt sind.

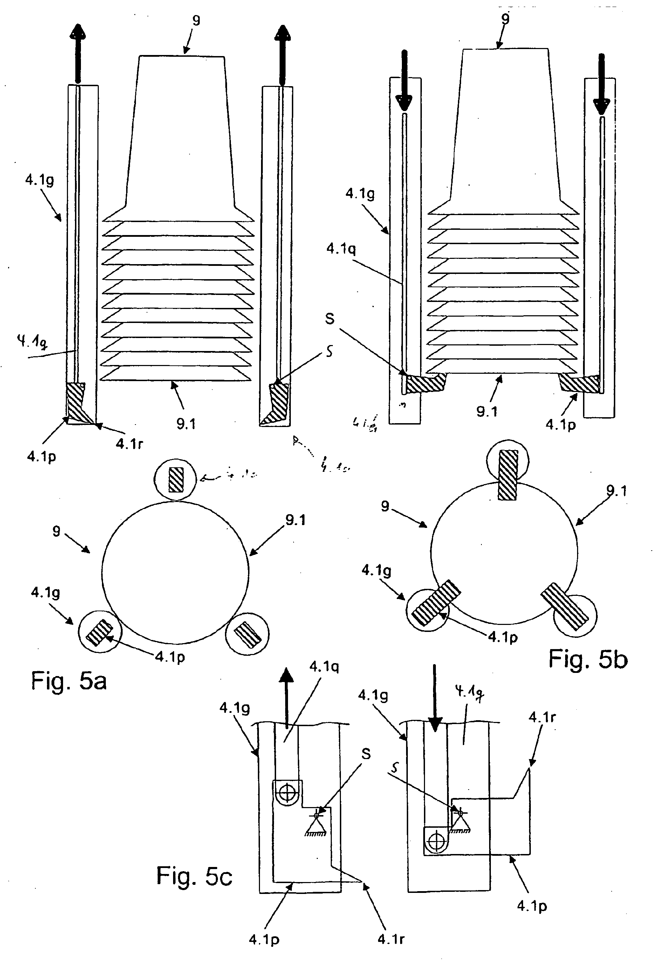

Bei t₁ werden die Becherstangen 9 der Kavität K durch Stempel 2.2 aus dem Ausgabebereich 2.1 der Herstellurigseinrichtung 2 aus- und in die Greifeinrichtung 4.1, die auch als Kavitätengreifer bezeichnet wird, übergeschoben. Dieser Vorgang ist zum Zeitpunkt t₂ abgeschlossen, zu dem sich die Becherstangen 9 in der Greifeinrichtung 4.1 befinden. Wenn sich die gesamte Kavität K in der Greifeinrichtung 4.1 befindet, werden die Stempel 2.2 zum Zeitpunkt t₃ wieder eingefahren und die Becherstangen 9 in der Greifeinrichtung 4.1 durch ein Verschlussmittel 4.1a gesichert, das im Folgenden anhand der Fig. 5a, b, c detailliert dargestellt wird.

Im Falle der Darstellung der Fig. 2 handelt es sich bei der Kavität K folglich um eine zweidimensionale Anordnung von 5x5 Becherstangen 9, die mit quadratischer Geometrie am Ausgabebereich 2.1 der Herstellungseinrichtung 2 bereitgestellt wird.

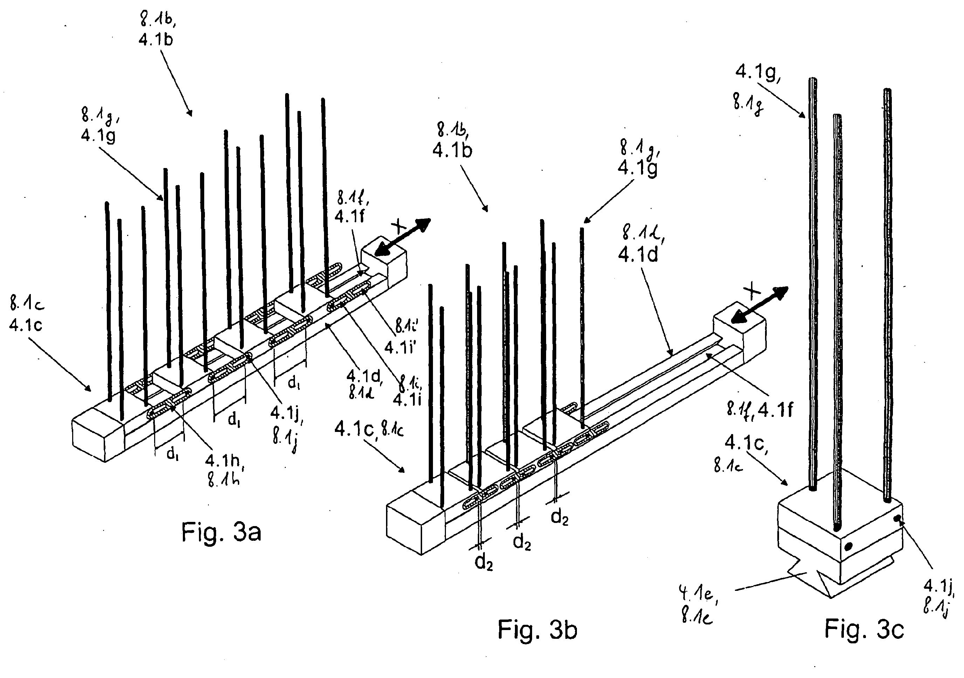

Die Fig. 3a-c zeigen Detailansichten einer Gruppe 4.1b von Greifelementen 4.1c der Greifeinrichtung 4.1 (Fig. 1, 2). Diese entsprechen in analoger Weise einer Gruppe 8.1b von Speicherelementen 8.1c in den Magazinmitteln 8 (Fig. 1), wobei lediglich bei letzteren kein Verschlussmittel vorhanden ist. Die in Fig. 3 a, b jeweils vier dargestellten Greifelemente 4.1c bzw. Speicherelemente 8.1c sind in einer Reihe längs eines.Schienenelements 4.1d, 8.1d in Richtung der Doppelpfeile X verschiebbar beweglich angeordnet. Dazu weisen die Greifelemente 4.1c (Speicherelemente 8.1c) beim gezeigten Ausführungsbeispiel in ihrem unteren Bereich jeweils einen Vorsprung 4.1e, 8.1e mit speziell schwalbenschwanzförmigem Profil auf, der in eine komplementäre Nut 4.1f, 8.1f des Schienenelements 4.1d, 8.1d eingreift. Ebenso ist auch eine normale Gleitlagerung anstelle des o.g. speziellen Profils möglich.

Die Greifelemente 4.1c und die Speicherelemente 8.1c weisen jeweils drei in Form eines Dreiecks angeordnete Führungsmittel 4.1g, 8.1g für die zwischen ihnen aufzunehmenden Becherstangen 9 (Fig. 2) auf, die speziell in Form von Stangen mit kreisförmigem Querschnitt ausgebildet sind und die sich senkrecht zu einer Erstreckungsrichtung des Schienenelements 4.1d, 8.1d bzw. der Richtung X der Verschiebbarkeit der Greifelemente 4.1c, 8.1c erstrecken.

Jeweils benachbarte Greif- und Speicherelemente 4.1c, 8.1c sind untereinander durch Verbindungsmittel 4.1h, 8.1h verbunden. Die Verbindungsmittel 4.1h, 8.1h weisen jeweils zwei Langlöcher 4.1i, 4.1i' bzw. 8.1i, 8.1i' auf, wodurch im Zusammenwirken mit an den Greifelementen 4.1c (Speicherelementen 8.1c) vorhandenen Befestigungsmitteln 4.1j, 8.1j für die Verbindungsmittel 4.1h, 8.1h zwei Extremabstände d₁, d₂ der Greifelemente 4.1c bzw. der Speicherelemente 8.1c untereinander definiert sind.

Somit ist es aufgrund der Ausgestaltung und Anordnung der Greifelemente 4.1c (Speicherelemente 8.1c) gemäß der Fig. 3a, b ausreichend, eine einzelne, in Richtung des Doppelpfeils X linear wirksames Kraftquelle (nicht gezeigt) vorzusehen, um den Abstand der Greifelemente 4.1c (Speicherelemente 8.1c) voneinander in einfacher Weise zwischen der ersten Stellung mit großem relativen Abstand d₁ und der zweiten Stellung mit kleinem relativen Abstand d₂ zu verändern.

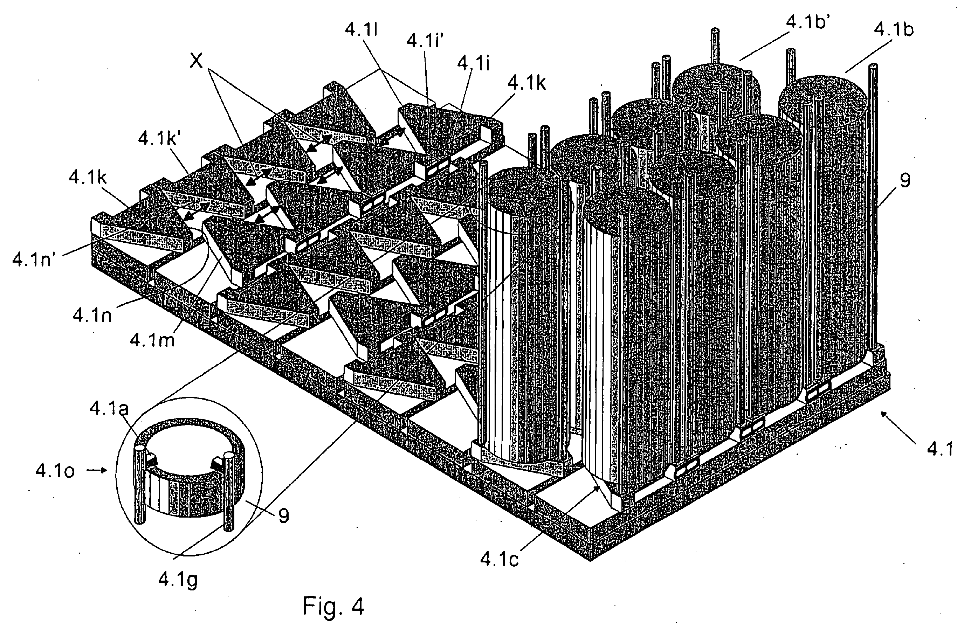

Die Fig. 4 zeigt eine Gesamtansicht der erfindungsgemäßen ersten Greifeinrichtung 4.1, bei der mehrere Gruppen 4.1b, 4.1b' von Greifelementen 4.1c in Form benachbarter, paralleler Reihen im Rahmen einer zweidimensionalen Anordnung von Greifelementen angeordnet sind; innerhalb jeder Reihe sind die relativen Abstände der Greifelemente 4.1c wiederum in Richtung der Doppelpfeile X veränderbar, wobei analog zu den Ausgestaltungen der Fig. 3a, b Verbindungsmittel 4.1h mit jeweils zwei Langlöchern 4.1i, 4.1i' zum Verbinden der Greifelemente 4.1c einer Reihe eingesetzt sind. Nach dem Vorstehenden können auch die Magazinmittel 8 der erfindungsgemäßen Vorrichtung entsprechend aufgebaut sein (vgl. Fig. 3a-c), was hier aus Gründen der Übersichtlichkeit nicht erneut dargestellt ist.

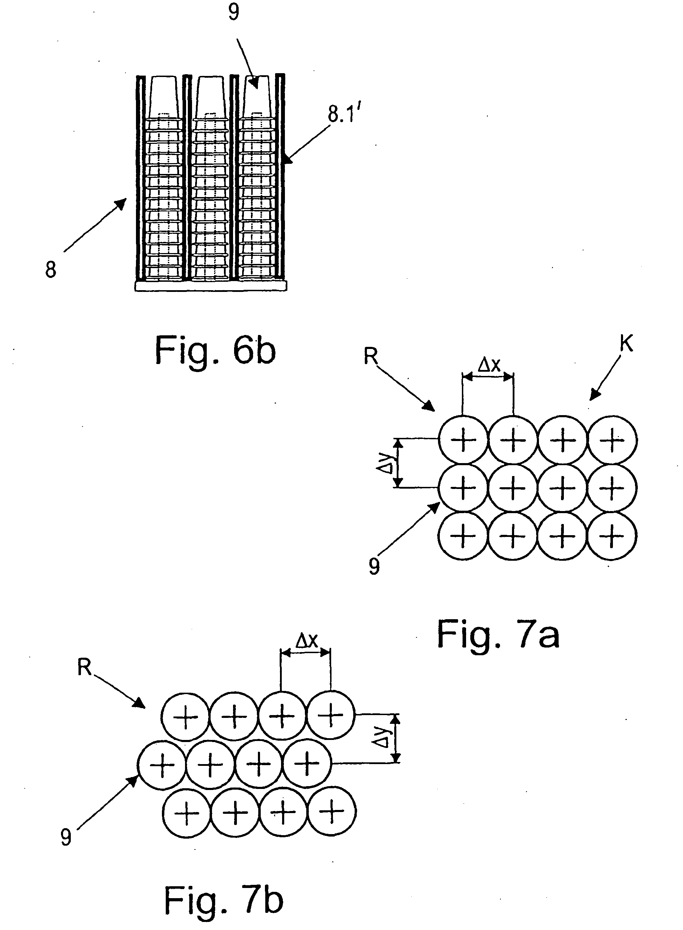

Im Gegensatz zu den in den Fig. 3a, b gezeigten Ausgestaltungen der Greifelemente 4.1c sind diese bei der Ausführungsform gemäß der Fig. 4 nicht mit quadratischer, sondern mit im Wesentlichen dreieckförmiger Basis 4.1k ausgebildet, wobei die Basen 4.1k, 4.1k' benachbarter Reihen von Greifelementen 4.1c jeweils um 180° in der Ebene der Greifelemente-Anordnung gegeneinander verdreht sind, so dass immer eine Spitze 4.11 einer Basis 4.1k eines Greifelements 4.1c in einen - ebenfalls dreieckförmigen - Bereich 4.1m zwischen einander zugewandten Flanken 4.1n, 4.1n' benachbarter Basen 4.1k, 4.1k' einer Reihe hineinragt. Auf diese Weise lassen sich durch die Greifeinrichtung 4.1 auch Kavitäten ergreifen, bei denen die Becherstangen 9 nach einem überlappenden Muster (vgl. Fig. 7b) oder einer flächig dichtesten Packung angeordnet sind.

Aufgrund der speziellen konstruktiven Ausgestaltung der ersten Greifeinrichtung 4.1, wie sie in den Fig. 3a-c und 4 dargestellt ist, lassen sich Kavitäten aus Becherstangen 9 mit einem ersten relativen Abstand, z.B. d₁, der durch die Herstellungseinrichtung 2 vorgegeben ist, ergreifen; anschließend kann durch einfaches Verschieben der Greifelemente 4.1c ein neuer, in der Regel engerer Abstand d₂ der Greifelemente 4.1c und damit der Becherstangen 9 zueinander eingestellt werden, der zumindest innerhalb der Reihen der Greifeinrichtung 4.1b einer angestrebten optimalen Packungsdichte der Becherstangen 9 in einem Ladehilfsmittel (Fig. 1) im Wesentlichen entspricht.

Die in den Fig. 3a-c und 4 gezeigten Reihen von Greifelementen 4.1c sind an ihrem jeweiligen Abstand zueinander einer konkreten Geometrie der von der Herstellungseinrichtung 2 (Fig. 1) bereitgestellten Kavität angepasst. Es entspricht beispielsweise dem Muster eines Werkzeugs der Herstellungseinrichtung (Tiefziehmaschine). Es ist jedoch bei einer Veränderung der Geometrie, z.B. bedingt durch den Einsatz eines anderen Werkzeugs in der Herstellungseinrichtung, jederzeit entsprechend anpassbar. Wie bereits vorstehend zu der Fig. 3a-c ausgeführt, kann die Geometrieänderung auch von der Greifeinrichtung 4.1 in die Magazinmittel 8 verlagert werden, wodurch sich insbesondere eine grundsätzlich erstrebenswerte konstruktive Vereinfachung der Greifeinrichtung 4.1 ergibt.

In der Fig. 4 ist weiterhin vergrößert ein oberer Bereich 4.1o eines Greifelements 4.1c bzw. dessen Führungsmittel 4.1g und die Verschlussmittel 4.1a zum Sichern einer Becherstange 9 dargestellt. Die erfindungsgemäße Sicherung der Becherstangen wird im Folgenden anhand der Fig. 5a-c genauer beschrieben.

Die Fig. 5a zeigt eine bevorzugte mögliche Ausgestaltung der Führungsmittel 4.1g der Greifelemente 4.1c mit integrierten Verschlussmitteln 4.1a. Die Verschlussmittel 4.1a umfassen nach dem gezeigten Ausführungsbeispiel einen Kipphebel 4.1p, der um eine Achse S senkrecht zu einer Erstreckungsrichtung der Führungsmittel 4.1g in einer endständigen Ausnehmung (nicht gezeigt) der Führungsmittel angelenkt und mit einem innerhalb der Führungsmittel 4.1g verlaufenden Gestänge 4.1q verbunden ist. Eine Abwärtsbewegung der Gestänge 4.1q in Richtung der Pfeile in Fig. 3b, oben, bewirkt ein Verschwenken der Kipphebel 4.1p nach innen, so dass diese mit ihrer Spitze 4.1r am Innenrand des untersten Bechers 9.1 einer Becherstange 9 anliegen. Dieser Bereich ist der stabilste Bereich eines Bechers, so dass es hier im Wesentlichen auch dann zu keiner Verformung des Bechers 9.1 kommt, wenn dieser erst vor kurzem produziert wurde, d.h. noch warm und leicht verformbar ist. Die Auf- und Abwärtsbewegung der Gestänge 4.1q in Richtung der Pfeile in den Fig. 5a, b (oben), c erfolgt beispielsweise mit Hilfe nicht dargestellter Antriebsmittel, z.B. pneumatisch oder elektromotorisch.

Die unteren Teilabbildungen der Fig. 5a, b zeigen Unteransichten der Führungsmittel 4.1g der Becherstangen 9 bei in den Becher 9.1 eingeschwenkten Kipphebeln 4.1p (Fig. 5b, unten; Fig. 5c rechts) bzw. ausgeschwenkten Kipphebeln 4.1p (Fig. 5a, unten; Fig. 5c, links).

Die Fig. 6a zeigt, wie erfindungsgemäß eine erste geometrische Anordnung der in der Greifeinrichtung 4.1 befindlichen Kavität in ein für das Ablegen in ein Ladehilfsmittel günstiges Muster umsetzbar ist. Im Kontext der verpackungslogistik bedeutet "günstig", dass ein solches Packbild im Ladehilfsmittel angestrebt ist, bei dem möglichst viele Becherstangen in das Ladehilfsmittel hineinpassen.

Mögliche Packmuster sind schematisch in den Fig. 7a, b dargestellt, in denen eine Anzahl von Becherstangen, die nach einem bestimmten Muster angeordnet sind, in Draufsicht gezeigt sind. Die Becherstangen 9 sind in Reihen R angeordnet, die untereinander einen festen Abstand ΔY aufweisen, während die Becherstangen 9 einer Reihe R untereinander in einem Abstand ΔX angeordnet sind. Hinsichtlich der Flächennutzung ist das Packmuster der Fig. 7b dem der Fig. 7a vorzuziehen.

Da nach den Fig. 3a, b und 4 die relativen Abstände der jeweils in einer Reihe angeordneten Greifelemente 4.1c bzw. Speicherelemente 8.1c einstellbar sind, lässt sich erfindungsgemäß einerseits bereits für die in der ersten Greifeinrichtung 4.1 befindlichen Becherstangen 9 ein erforderlicher Abstand ΔX der Becherstangen 9 innerhalb einer Reihe R einstellen, der beispielsweise dem in der Fig. 3b gezeigten Abstand d₂ entspricht. Nachdem somit die einzelnen Reihen R der Kavität K hinsichtlich des Abstands ΔX der Becherstangen 9 auf ein für das Ablegen in das Ladehilfsmittel erwünschtes Abstandsmaß angepasst sind, wird die Reihe R gemäß der Fig. 6a, links, in Magazinmittel 8 abgelegt. Alternativ kann ein Teil der Kavität K ohne vorherige Abstandsänderungen in Magazinmittel 8 eingebracht werden. Die Abstandsänderung erfolgt dann in den Magazinmitteln.

Die Magazinmittel 8 weisen in der Variante, bei der die Geometrieänderung allein durch die Greifeinrichtung 4.1 vorgenommen wird, gemäß den schematischen Draufsichten der Fig. 6a zu jeweils unterschiedlichen, aufeinanderfolgenden Zeitpunkten t₁-t₆ eine zweidimensionale Anordnung von statischen Speicherelementen 8.1' auf, die so ausgebildet sind, dass jeweils eine Becherstange 9 zwischen zwei innerhalb einer Reihe benachbarten Speicherelementen 8.1' der Magazinmittel 8 statisch aufgenommen und gehalten werden kann. Eine Seitenansicht der Magazinmittel 8 mitsamt Speicherelementen 8.1' und Becherstangen 9 ist in der Fig. 6b gezeigt.

Zum Zeitpunkt t₁ wird ein erstes Segment K₁ der Kavität mittels der ersten Greifeinrichtung 4.1 (in Fig. 6a nicht gezeigt) in einem ersten Bereich der Magazinmittel 8 abgelegt. Die Abstände ΔX der Becherstangen 9 in den Magazinmitteln 8 entsprechen dem durch die erste Greifeinrichtung 4.1 eingestellten und für ein optimales Ablegen der Becherstangen 9 in ein Ladehilfsmittel geeigneten Abstand.

Zum Zeitpunkt t₂ wird in den Magazinmitteln 8 ein zweites Segment K₂ der Kavität abgelegt; zum Zeitpunkt t₃ folgt das dritte Segment K₃, so dass die Magazinmittel 8 zu diesem Zeitpunkt vollständig mit Becherstangen 9 gefüllt sind, deren Abstand zueinander innerhalb einer Reihe bereits demjenigen entspricht, der für das angestrebte Packmuster im Ladehilfsmittel benötigt wird.

Im Zuge der weiteren Variante, bei die Abstandsänderung nicht in der Greifeinrichtung 4.1 erfolgt, werden an dieser Stelle die einzelnen Speicherelemente 8.1 der Magazinmittel 8 zur Herstellung des angestrebten Packmusters verfahren.

Nachdem die Magazinmittel 8 zum Zeitpunkt t₃ komplett mit Becherstangen 9 gefüllt sind, werden anschließend mittels einer weiteren Greifeinrichtung (nicht gezeigt) die Becherstangen 9 reihenweise an den magazinmitteln 8 wieder aufgenommen und in das Ladehilfsmittel 7.1 (Fig. 1) abgelegt. Dies geschieht gemäß der Fig. 6a zu Zeitpunkten t₄, t₅, t₆ jeweils für eine Reihe von Becherstangen 9, bis zum Zeitpunkt t₆ die Magazinmittel 8 wieder vollständig geleert sind.

Die weitere, gemäß der Fig. 6a zum reihenweisen Aufnehmen der Becherstangen zu den Zeitpunkten t₄-t₆ zum Einsatz kommende Greifeinrichtung (4.2) besteht aus denselben Greifelementen 4.1c wie die Greifeinrichtung 4.1 (Kavitätengreifer). Ein Unterschied kann darin bestehen, dass die Greifelemente der weiteren Greifeinrichtung (Reihengreifer) nicht gegeneinander verschiebbar angeordnet sind und dass nur eine einzige Becherstangenreihe aufgenommen wird, die länger als die Kavitätensegmente K₁-K₃ sein kann.

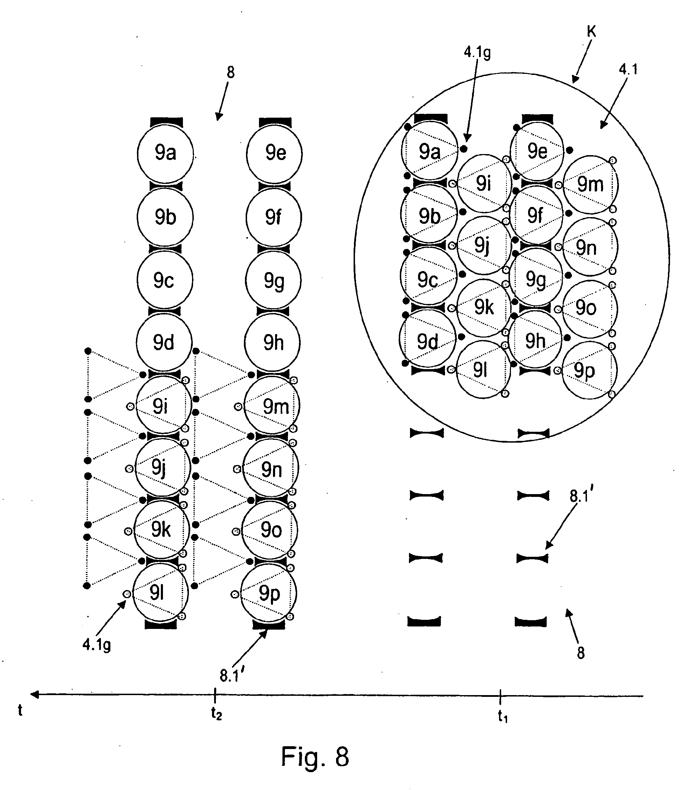

Die Fig. 8 zeigt das Ablegen von Becherstangen 9a-9p in Magazinmitteln 8 mit entsprechenden Speicherelementen 8.1' im Falle einer Kavität K, innerhalb derer die Becherstangen 9a-9p nach Maßgabe eines entsprechenden Werkzeugs der Herstellungseinrichtung 2 (Fig. 1) überlappend angeordnet sind. In diesem Fall werden mittels der Greifeinrichtung 4.1, von der in der Fig. 8 nur die Führungsmittel 4.1g gezeigt sind, zu einem ersten Zeitpunkt t₁ nur einzelne Reihen bzw. Reihenpaare aus den Becherstangen 9a-9d bzw. 9e-9h in den Magazinmitteln 8 abgelegt. Anschließend verfährt das Handhabungsgerät 3.1 die Greifeinrichtung 4.1, so dass zu einem späteren Zeitpunkt t₂ die verbleibenden Reihen bzw. Reihenpaare der Kavität K (Becherstangen 9i-91 bzw. 9m-9p) in den entsprechenden Speicherelementen 8.1' der Magazinmittel 8 abgelegt werden können.

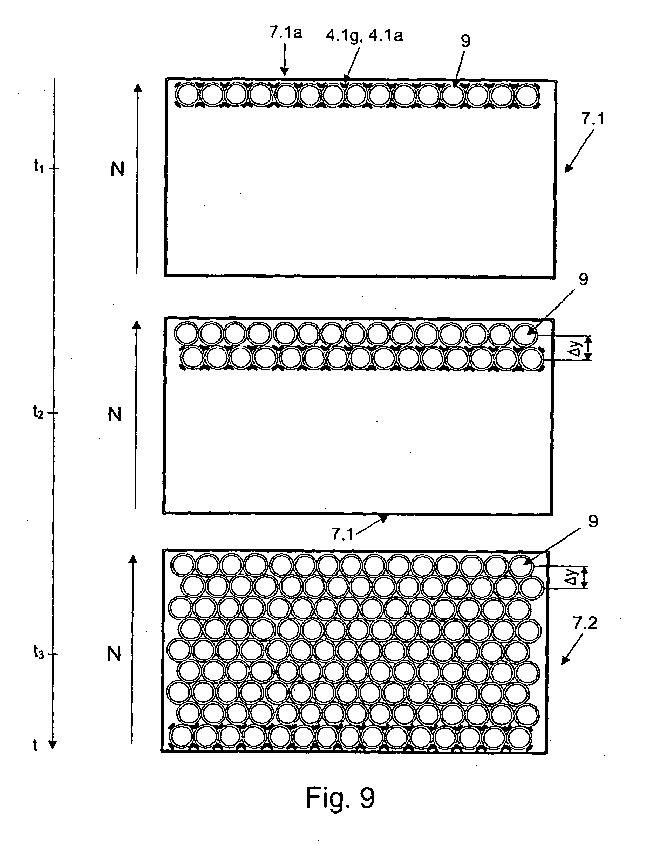

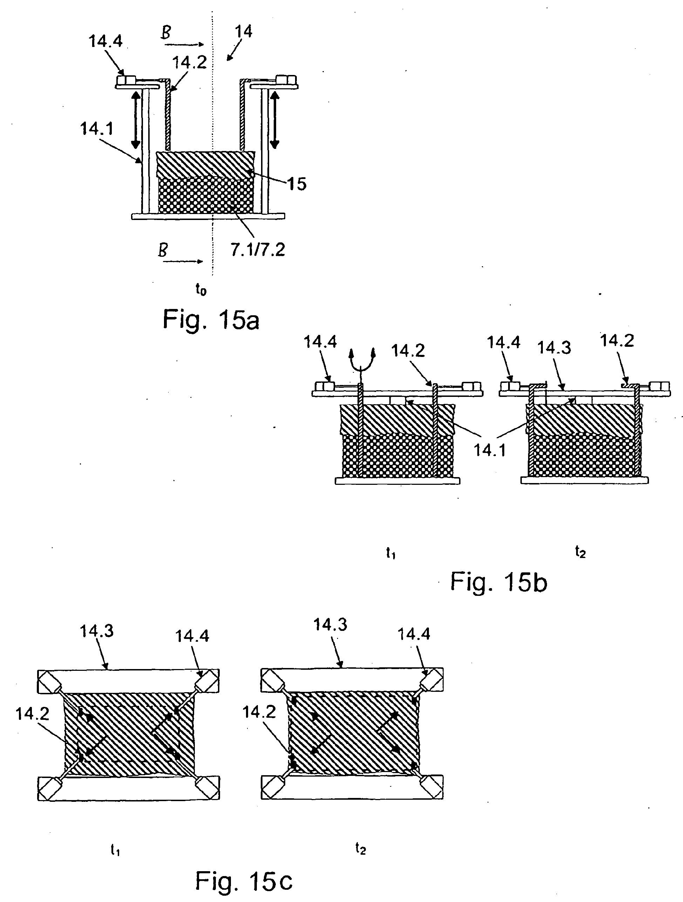

Das Ablegen einer Becherstange 9 in ein Ladehilfsmittel 7.1 ist in der Fig. 9 zu drei aufeinanderfolgenden Zeitpunkten t₁, t₂, t₃ dargestellt. Zum Zeitpunkt t₁ enthält das Ladehilfsmittel 7.1, beispielsweise ein Karton, nur eine einzige Reihe von Becherstangen 9. Zwischen den einzelnen Becherstangen 9 sind noch die einzelnen Führungs- und Verschlussmittel 4.1g, 4.1a des Reihengreifers zu erkennen. Zum Zeitpunkt t₂ wird mittels des Reihengreifers eine zweite Reihe von Becherstangen 9 in das Ladehilfsmittel 7.1 abgelegt, wobei das Ablegen dergestalt erfolgt, dass eine relative Anordnung der beiden Reihen, insbesondere hinsichtlich ihres Abstandes ΔY, dem angestrebten optimalen Packungsmuster im Ladehilfsmittel 7.1 entspricht (vgl. Fig. 7b). Zum Zeitpunkt t₃ ist schließlich ein komplett mit Becherstangen 9 nach dem angestrebten optimalen Packungsmuster gefülltes Ladehilfsmittel 7.2 dargestellt. Damit die in dem Ladehilfsmittel 7.1 abgelegten Becherstangenreihen vor der vollständigen Füllung des Ladehilfsmittels zum Zeitpunkt t₃ nicht umkippen, ist das Ladehilfsmittel 7.1 während des Ablegevorgangs gegen die Vertikale V, die gemäß der Darstellung der Fig. 9 aus der Zeichenebene herausweist, in Richtung des Pfeils N geneigt, so dass sich insbesondere die erste Becherstangenreihe an einer Wand 7.1a des Ladehilfsmittels 7.1 abstützen kann. Das geschieht erfindungsgemäß in einer sogenannten Spreizstation, die weiter unten anhand der Fig. 15 noch detailliert beschrieben wird. Die Spreizstation dient weiterhin zum Positionieren der Ladehilfsmittel 7.1.

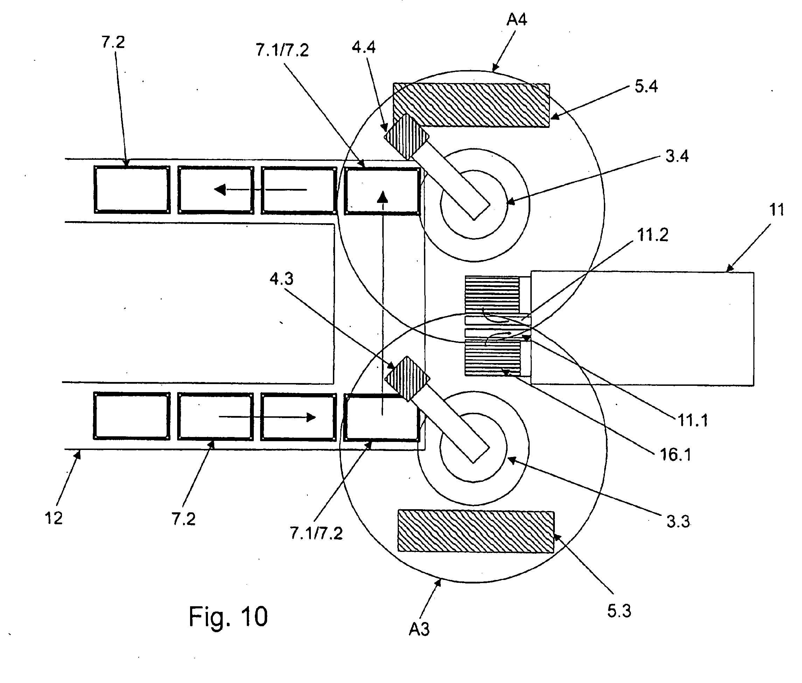

Die Fig. 10 zeigt die erfindungsgemäße Vorrichtung 1 im Bereich einer Weiterbearbeitung der Kunststoffbecher. Hierzu sind im Bereich einer Weiterbearbeitungseinrichtung 11, wie einer Dekormaschine, zwei weitere Handhabungsgeräte 3.3, 3.4 im Form von Industrierobotern der oben genannten Art vorgesehen. Innerhalb der Arbeitsbereiche A3 und A4 der Handhabungsgeräte 3.3 bzw. 3.4 befinden sich jeweils Werkzeugbahnhöfe 5.3, 5.4 sowie ein Eingangsbereich 11.1 bzw. ein Ausgangsbereich 11.2 der Weiterbearbeitungseinrichtung 11. Die weiter zu bearbeitenden Becherstangen werden dem Arbeitsbereich A3 des Handhabungsgeräts 3.3 in gefüllten Ladehilfsmitteln 7.2 (Fig. 9) über ein Fördermittel 12 zugeführt. Analog zur obigen Beschreibung der Herstellung und des anschließenden Ablegens der Objekte werden die Ladehilfsmittel auch im Bereich der Weiterbearbeitung vorzugsweise durch eine Spreizstation (Fig. 15) positioniert und geneigt.

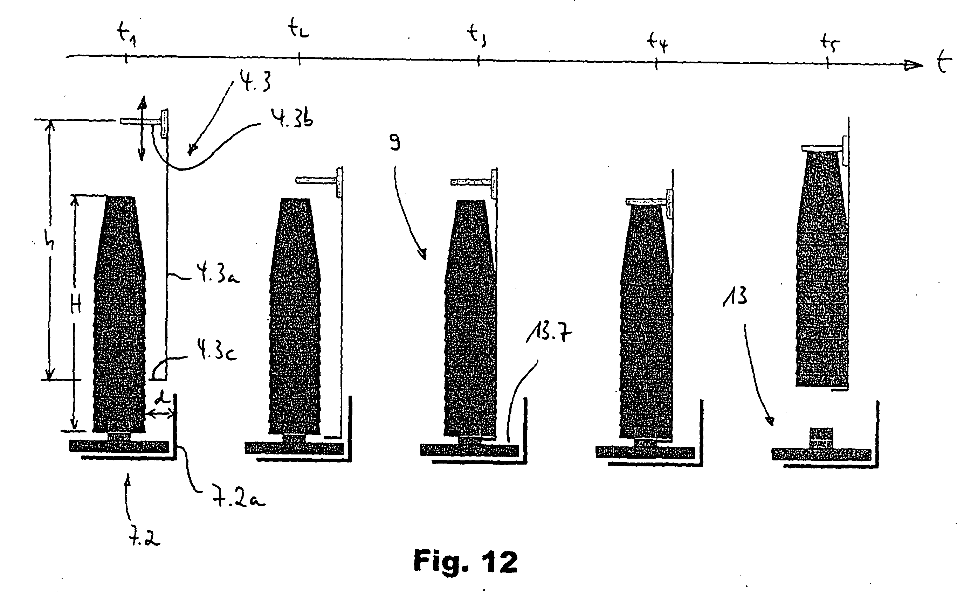

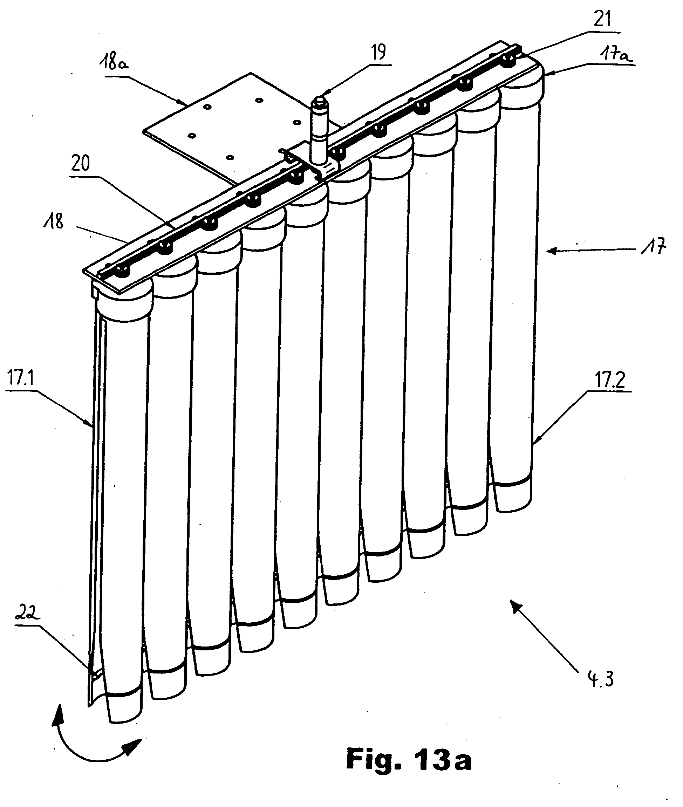

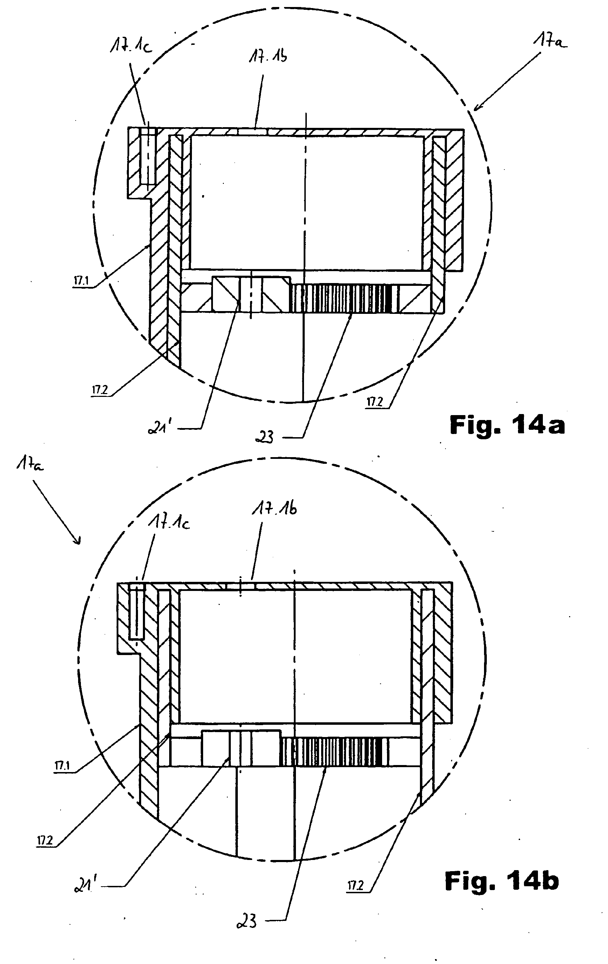

Das Handhabungsgerät 3.3 weist eine Entnahmeeinrichtung 4.3 für die in den Ladehilfsmitteln 7.2 enthaltenen Becherstangen auf. Die Entnahmeeinrichtung 4.3 wird nachfolgend anhand der Fig. 12 und alternativ anhand der Fig. 13a-c, 14a-c, näher erläutert. Mittels der Entnahmeeinrichtung 4.3 entnimmt das Handhabungsgerät 3.3 Becherstangen aus den Ladehilfsmitteln 7.2 und stellt sie der Weiterbearbeitungseinrichtung 11 an deren Eingangsbereich 11.1 zur Weiterbearbeitung, hier zum Dekorieren der Becher, zur Verfügung. Nach erfolgter Weiterbearbeitung in der Weiterbearbeitungseinrichtung 11 werden die Becher in Form von Becherstangen am Ausgangsbereich 11.2 der Weiterbearbeitungseinrichtung 11 durch das Handhabungsgerät 3.4 mittels einer der Entnahmeeinrichtung 4.3 im Wesentlichen entsprechenden Greifeinrichtung 4.4 wieder ergriffen und erneut in das Ladehilfsmittel 7.1/7.2 abgelegt.

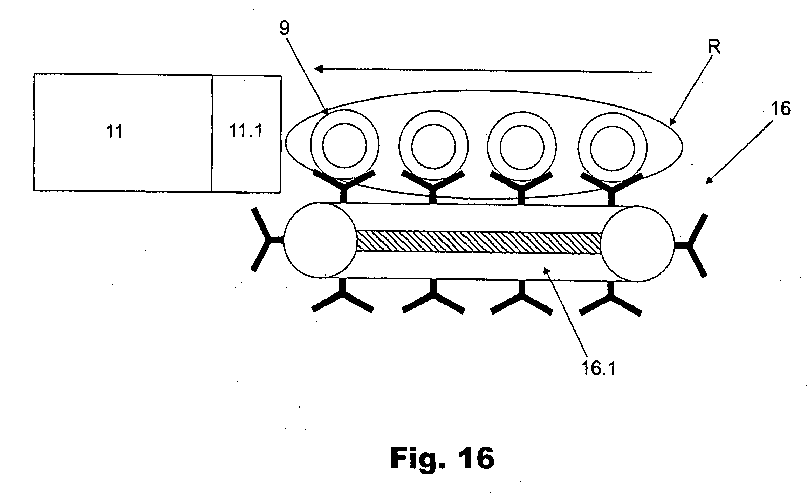

Der Eingangs- und Ausgangsbereich 11.1 und 11.2 der Weiterbearbeitungseinrichtung 11 werden nachfolgend anhand der Fig. 16 näher erläutert.

Die Werkzeugbahnhöfe 5.3, 5.4 dienen analog der Beschreibung der Fig. 1 zum Auswechseln der Entnahme- bzw. Greifeinrichtungen 4.3, 4.4 im Zuge einer Änderung bestimmter Becherparameter, wie insbesondere des Becherdurchmessers oder dergleichen.

Um ein problemloses Entnehmen der Becherstangen aus den Ladehilfsmitteln 7.2, wie vorstehend anhand der Fig. 11 ausgeführt, auch bei optimal dichter Packung der Becherstangen in dem Ladehilfsmittel zu ermöglichen, ist im Zuge des hier beschriebenen Ausführungsbeispiels des erfindungsgemäßen Verfahrens und der erfindungsgemäßen Vorrichtung die Verwendung einer Positionierungseinlage 13 innerhalb der Ladehilfsmittel 7.1/7.2 vorgesehen.

Eine Positionierungseinlage der nachfolgend beschriebenen Art ist insbesondere notwendigerweise dann vorzusehen, wenn zwischen Abmessungen des optimalen Packmusters und den (Innen-)Maßen des Ladehilfsmittels große Abweichungen bestehen, so dass die Objekte sich während des Transports zu weit von ihrer Sollposition entfernen können. Außerdem wird eine Positionierungseinlage immer dann verwendet, wenn Becherstangen mit der Becheröffnung nach unten in das Ladehilfsmittel eingebracht werden sollen (Schutz des empfindlichen Siegelrands der Becher, Vermeiden einer Verzahnung der Becherstangen über ihre Mantelflächen).

Eine Ausführungsform der Positionierungseinlage 13 ist in der Fig. 11a im Schnitt (oben) sowie in einer Draufsicht (unten) schematisch dargestellt. Sie ist in Karton- oder einem Kunststoffmaterial ausgebildet und innerhalb des (zunächst leeren) Ladehilfsmittels 7.1 angeordnet, vorzugsweise in dessen Bodenbereich. Die Positionierungseinlage 13 wird erfindungsgemäß vor dem Verladen der Becherstangen im Bereich der Herstellungseinrichtung 2 (Fig. 1) in das Ladehilfsmittel eingebracht.

Die Positionierungseinlage 13 weist in ihrer Oberseite 13.1 eine Anordnung von Aufnahmemitteln in Form von Vorsprüngen 13.2 auf, die gemäß dem angestrebten Packungsmuster der Becherstangen reihenweise versetzt angeordnet sind. Jeweils zwei in einer Reihe benachbart angeordnete Vorsprünge 13.2', 13.2'' weisen an ihren aneinander zugewandten Innenseiten 13.3', 13.3'' Ausnehmungen 13.4', 13.4'' auf, deren konkrete Ausformung einer Form des in ihnen aufgenommenen Abschnitts einer Mantelfläche der Becher entspricht (Fig. 11b). Erfindungsgemäß sind die Ausnehmungen 13.4', 13.4'' der Innenseiten 13.3', 13.3'' der Vorsprünge 13.2, 13.2', 13.2'' der Positionierungseinlage 13 nur in deren oberen Abschnitten angeordnet, so dass unterhalb ein Sockel 13.5 verbleibt, durch den die in den Ausnehmungen 13.4', 13.4'' aufgenommenen Becher bzw. Becherstangen von der Oberseite 13.1 der Positionierungseinlage 13 beabstandet gehalten sind.

Die Fig. 11b zeigt einen Abschnitt der erfindungsgemäßen Positionierungseinlage 13 mit in den Ausnehmungen der Vorsprünge 13.2 aufgenommenen Becherstangen 9 aus ineinander gestapelten Kunststoffbechern 9.1.

Die Fig. 11c zeigt ein einzelnes Aufnahmemittel 13.2 in der Perspektive. Erkennbar sind insbesondere zwei kreisabschnittförmige Ausnehmungen 13.2a, b zum Aufnehmen entsprechender Bereiche der Becher 9.1/Becherstangen 9.

Durch die Anordnung der Becherstangen 9 in der gezeigten Positionierungseinlage 13 bleibt die gewünschte optimale Packungsdichte der Becherstangen auch im Verlauf eines Transports der Ladehilfsmittel dauerhaft erhalten. Zudem kommt es aufgrund der dauerhaft sicheren Anordnung der Becherstangen auch für den Fall, dass diese bzw. die Becher aufgrund einer zeitlichen Nähe zu ihrer Herstellung noch warm und leicht verformbar sind, zu keiner nachteiligen Beeinträchtigung der Becherqualität.

Nach der Darstellung der Fig. 11b weist die Positionierungseinlage 13 in ihrem Randbereich 13.6 ein Beabstandungsmittel 13.7 auf, durch das eine einer Wand 7.1a des Ladehilfsmittels 7.1 benachbarte Reihe von Becherstangen um ein Maß d von letzterer beabstandet gehalten ist. Dieser Aspekt ist hinsichtlich der in der Fig. 12 sowie in den Fig. 13a-c, 14a-c gezeigten konstruktiven Ausgestaltungen der Entnahmeeinrichtung 4.3 für Becherstapel 9 (Reihen von Becherstapeln 9) aus einem gefüllten Ladehilfsmittel 7.2 gemäß der Fig. 10 von entscheidender Bedeutung. Weiterhin schafft die Positionierungseinlage 13 einen Abstand b des jeweils untersten Bechers jeder Becherstange 9 vom Becher 7.2b des Ladehilfsmittels 7.2.

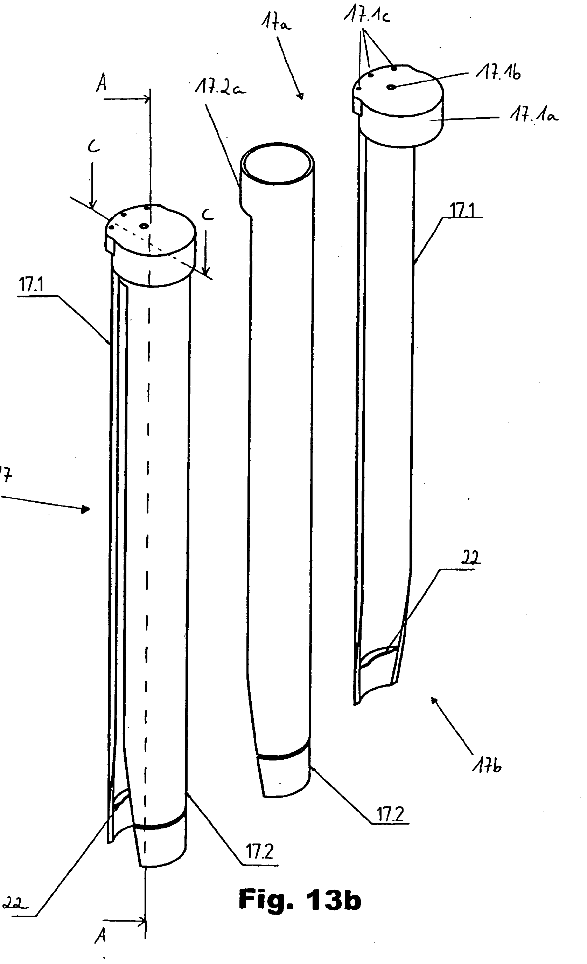

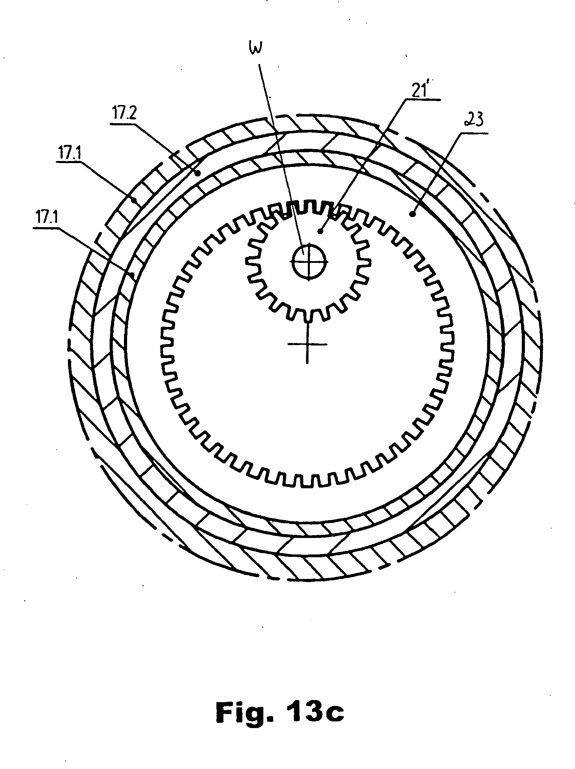

Die Entnahmeeinrichtung 4.3 ist nach einem ersten Ausführungsbeispiel gemäß der Fig. 12 als Reihengreifer ausgebildet, durch den eine komplette Reihe von Becherstangen 9 aus dem Ladehilfsmittel 7.2 aufnehmbar ist. Die Entnahmeeinrichtung weist zu diesem Zweck für jede Becherstange 9 ein hakenförmiges Untergreifmittel 4.3a auf, das aufgrund seiner Abmessungen in den Spalt der Breite d zwischen der Wand 7.2a des Ladehilfsmittel 7.2 von den benachbart angeordneten Becherstangen 9 einbringbar ist. Dies ist in der Fig. 13 bei t₁ und t₂ gezeigt. An dem Untergreifmittel 4.3a ist relativ zu diesem beweglich ein Niederhaltemittel 4.3b angeordnet, das mittels eines elektrischen oder pneumatischen Antriebs (nicht gezeigt) in Richtung der Doppelpfeile der Fig. 13 nach oben und unten verschiebbar ist. Auf diese Weise ist ein Abstand h zwischen einer Spitze 4.3c des Untergreifsmittels 4.3a und dem Niederhaltemittel 4.3b der Entnahmeeinrichtung 4.3 an eine Höhe H der Becherstange 9 anpassbar. Dies ist bei t₃ und t₄ dargestellt, nachdem die Entnahmeeinrichtung 4.3 durch das zugeordnete Handhabungsgerät 3.3 zumindest mit der Spitze 4.3c des Untergreifmittels.4.3a in einen Freiraum unterhalb der Becherstange 9 im Bereich des Sockels 13.5 der Positionierungseinlage 13 (Fig. 11a) eingebracht wurde. Das Niederhaltemittel 4.3b verfährt so weit nach unten, bis eine individuell für jeden Bechertyp einstellbare Haltekraft zwischen Niederhaltemittel 4.3b und der Spitze 4.3c des Untergreifsmittels 4.3a erreicht ist, so dass die Becherstange 9 zwischen der Spitze und dem Niederhalter eingeklemmt ist. Die Becherstange 9 bzw. die gesamte Becherstangereihe kann nun aus dem Ladehilfsmittel 7.2 entnommen und durch das Handhabungsgerät 3.3 der weiterbearbeitungseinrichtung 11 (Fig. 10) zugeführt werden.

Eine weitere, bevorzugte Ausgestaltung der Entnahmeeinrichtung 4.3 ist in den Fig. 13a-c, 14a-c dargestellt und fungiert ebenfalls als Reihengreifer. Gemäß der Fig. 13a weist die Entnahmeeinrichtung 4.3 zu diesem Zweck für jede Becherstange 9 eine im wesentlichen kreiszylinderförmige Schalenanordnung 17 mit zwei Halbschalen 17.1 und 17.2 auf. Die Schalenanordnungen 17 sind in einer Reihe angeordnet und an einem gemeinsamen Trägermittel 18 im Bereich eines ihrer jeweiligen oberen Enden 17a aufgehängt. Das Trägermittel 18 besitzt eine Flanschplatte 18a zur Verbindung mit dem Werkzeugflans.ch eines Handhabungsgeräts. Weiterhin zeigt die Fig. 13a einen Antrieb 19 und eine an dem Trägermittel 18 angeordnete Zahnstange 20, die mit den Schalenanordnungen 17 jeweils zugeordneten Zahnrädern 21 in Wirkverbindung steht. Der Antrieb 19 ist zum Verschieben der Zahnstange 20 in Richtung deren Erstreckung ausgebildet. Die Halbschale 17.1 der Schalenanordnung 17 ist eine bezüglich der Greifeinrichtung 4.3 starre Halbschale, wogegen die Halbschale 17.2 beweglich, insbesondere relativ zu der Halbschale 17.1, rotierbar ist. Das Verdrehen der Halbschale 17.2 erfolgt elektrisch oder pneumatisch über eine mit dem Antrieb verbundene Kraftquelle (nicht gezeigt). Über die beiden Halbschalen 17.1, 17.2 ist es möglich, Becherstangen im Innern der Schalenanordnungen 17 beinahe vollständig zu umschließen.

Die Schalenanordnung 17 sowie die Teilschalen 17.1, 17.2 sind in der Fig. 13b nochmals einzeln dargestellt. Dieser ist weiterhin im unteren Endbereich 17b zumindest der Teilschale 17.1 eine über den Innenumfang der Teilschale 17.1 angeordnete Auflagelippe 22 zur Sicherung in den Schalenanordnungen 17 aufzunehmender Objekte zu entnehmen; vorzugsweise besitzt auch die Teilschale 17.2 eine solche Auflagelippe 22. Die Teilschale 17.1 hat in ihrem oberen Bereich 17a eine Abschlusskappe 17.1a mit Bohrungen 17.1b, c. Die Teilschale 17.2 weist in ihrem oberen Bereich 17a einen ringförmigen Ansatz 17.2a auf.

Weitere Einzelheiten der erfindungsgemäßen Entnahmeeinrichtung 4.3 der Fig. 13a zeigt die Fig. 13c anhand eines Schnitts etwa längs der Linie C-C in Fig. 13b. Demgemäß ist die Abschlusskappe 17.1a doppelwandig ausgebildet und umfasst so den Ansatz 17.2a. Im Innern der Abschlusskappe *17.1a* und mit dieser fest verbunden ist zusätzlich ein Innen-Zahnrad 23 vorgesehen, das mit einem (Außen-)Zahnrad 21' in kämmendem Eingriff steht, wobei das Zahnrad 21' vorzugsweise auf einer gemeinsamen Welle W mit dem bereits vorstehend genannten Zahnrad 21 der Entnahmeeinrichtung 4.3 (Fig. 13a) angeordnet ist. Die Welle W verläuft erfindungsgemäß durch die Bohrung 17.1b (Fig. 13b) und ist gemäß Fig. 13a über das Zahnrad 21 durch den Antrieb 19 drehbar, wobei sich die Drehung über die Zahnräder 21', 23 auf die bewegliche Halbschale 17.2 überträgt. Die Bohrungen 17.1c dienen zum Befestigen der Halbschale 17.1 (und damit der Schalenanordnung 17) am Trägermittel 18 (Fig. 13a). Nach Maßgabe des Antriebs 19 werden somit über die Zahnstange 20 durch Kopplung mit den Zahnrädern 21, 21', 23 alle als Entnahmeeinheiten fungierenden Schalenanordnungen 17 gleichzeitig betätigt.

Die Entnahme der Becherstangen erfolgt derart, dass die Entnahmeeinrichtung 4.3 sich in einer Stellung befindet, bei der die Halbschalen einander überdeckend angeordnet sind, d.h. die Halbschale 17.2 liegt vor der Halbschale 17.1. In dieser Stellung fährt das Handhabungsgerät 3.3 mit der Entnahmeeinrichtung 4.3 in das gefüllte Ladehilfsmittel 7.2 ein. Sobald die Entnahmeeinrichtung 4.3 komplett eingetaucht ist, d.h. bis zum Boden des Ladehilfsmittels 7.2 bzw. bis auf die Positionierungseinlage 13, wird die Halbschale 17.2 über den Antrieb 19 verdreht, so dass am Ende jede einzelne Becherstange durch eine Schalenanordnung 17 umschlossen ist. Dies entspricht für jede Schalenanordnung 17 der Darstellung in Fig. 13b, links. Die Auflagelippe 22 ist dann derart positioniert, dass sie unterhalb des untersten Bechers der Becherstange liegt, wodurch beim Herausfahren der Entnahmeeinrichtung 4.3 aus dem Ladehilfsmittel die Becherstange gesichert ist. Hierbei ist der mittels der Positionierungseinlage 13 (Fig. 11a-c) geschaffene Abstand b des untersten Artikels jedes Objekts vom Boden 7.2b des Ladehilfsmittels 7.2 von entscheidender Bedeutung.

Die Fig. 14a, b zeigen weitere Einzelheiten der Entnahmeeinrichtung 4.3 anhand eines Längsschnitts entlang der Linie A-A in Fig. 13b, jeweils in Detailansicht im oberen Bereich 17a der Schalenanordnungen 17. In Fig. 14a ist der geöffnete Zustand der Schalenanordnungen 17 dargestellt; Fig. 14b illustriert den geschlossenen Zustand.

Die Greifeinrichtung 4.4 zum erneuten Einpacken der Becherstangen nach erfolgter Weiterbearbeitung ist erfindungsgemäß analog zu der zweiten Greifeinrichtung 4.2 oder der Entnahmeeinrichtung 4.3 ausgebildet.

Vorzugsweise wird auch beim Auspacken der Becherstangen das Ladehilfsmittel, wie bereits für den Einpackvorgang beschrieben, leicht schräg gestellt. Das erwähnte Neigen der Ladehilfsmittel 7.1, 7.2 erfolgt erfindungsgemäß in einer in den Fig. 15a-c dargestellten Spreizstation 14 der erfindungsgemäßen Vorrichtung. Diese ist in den Darstellungen der Fig. 1 und 10 aus Gründen der Übersichtlichkeit nicht gezeigt. Die Spreizstation 14 hat die vorrangige Aufgabe, die Ladehilfsmittel 7.1, 7.2 exakt zu positionieren und eine beim gezeigten Ausführungsbeispiel in den Ladehilfsmitteln enthaltene Auskleidung 15, insbesondere einen aus hygienischen Gründen vorgesehenen Kunststoffbeutel, derart auszubreiten und an die Wände 7.1a, 7.2a der Ladehilfsmittel 7.1, 7.2 anzulegen, dass sich beim Ein- bzw. Ausfahren der Greifeinrichtungen keine Kollisionspunkte ergeben, und die Auskleidung 15 beschädigt werden könnte. Die Spreizstation 14 weist nach dem gezeigten Ausführungsbeispiel zwei in Richtung der Doppelpfeile der ersten Seitenansicht der Fig. 15a aus- und einfahrbare Teleskop-/Hubeinheiten 14.1 auf, zwischen denen das Ladehilfsmittel 7.1/7.2 mitsamt der Auskleidung 15 positionierbar ist. An den Teleskopeinheiten 14.1 sind Spreizdorne 14.2 angeordnet, die mittels eines dazwischen geschalteten Verfahrelements 14.3 unter Einwirkung geeigneter Antriebsmittel 14.4 diagonal nach außen verfahrbar sind (vgl. Fig. 14c).

In der Fig. 14b sind Stellungen der Spreizdorne 14.2 zu verschiedenen Zeitpunkten t₁ und t₂ gezeigt. Die Fig. 14b stellt eine Schnittansicht der Darstellung gemäß der Fig. 14a entlang der Linie B-B dar. Die Fig. 15c zeigt die selben Zeitpunkte in einer Draufsicht.

Durch das diagonale Verfahren der Spreizdorne 14.2 nach außen wird das Ladehilfsmittel 7.1/7.2 in zwei Richtungen positioniert sowie die Auskleidung 15 ausgebreitet und an die Wände des Ladehilfsmittels angelegt.

Die Antriebsmittel 14.4 für die Teleskopeinheiten 14.1 und zum Verfahren der Spreizdorne 14.2 können wiederum beispielsweise elektromotorischer oder pneumatischer Natur sein.

Schließlich sind in der Fig. 16 weitere Magazinmittel 16 gezeigt, wie sie im Eingangsbereich 11.1 und im Ausgangsbereich 11.2 einer Weiterbearbeitungseinrichtung 11 gemäß der Fig. 10 zum Einsatz kommen. Die Magazinmittel 16 unterscheiden sich erheblich von den Magazinmitteln 8 im Bereich der Herstellungseinrichtung 2 (Fig. 1). Bei den Magazinmittel 16 werden die Becherstangen 9 zur Erhöhung der Betriebssicherheit der Weiterbearbeitungseinrichtung 11, beispielsweise einer Dekoriermaschine, mittels eines umlaufenden Fördermittels 16.1 reihenweise aktiv getaktet weiterbewegt und an die Weiterverarbeitungseinrichtung 11 übergeben. Entsprechend ist in der Fig. 15 eine aus vier Becherstangen 9 gebildete Reihe R dargestellt, die gemäß der Beschreibung der Fig. 11 mittels der Entnahmeeinrichtung 4.3 aus dem Ladehilfsmittel 7.2 entnommen wurde und nun in Richtung des Pfeils der Fig. 15 durch das Fördermittel 16.1 dem Eingangsbereich 11.1 einer Weiterverarbeitungseinrichtung 11 zugeführt wird. Eine identische Anordnung findet sich erfindungsgemäß am Ausgangsbereich 11.2 der weiterverarbeitungseinrichtung 11 und dient hier dazu, die Becherstange 9 nach erfolgter Weiterverarbeitung reihenweise dem Handhabungsgerät 3.4 (Fig. 10) zum Wiederverpacken zuzuführen.

### Bezugszeichenliste

- 1: Vorrichtung
- 2: Herstellungseinrichtung
- 2.1: Ausgabebereich
- 2.2: Stempel
- 3.1, 3.2, 3.3., 3.4.: Handhabungsgerät
- 4.1, 4.2, 4.3, 4.4.: Greifeinrichtung
- 4.1a: verschlussmittel
- 4.1b, 4.1b': Gruppe
- 4.1c: Greifelement
- 4.1d: Schienenelement
- 4.1e: Vorsprung
- 4.1f: Nut
- 4.1g: Führungsmittel
- 4.1h: Verbindungsmittel
- 4.1i, 4.1i': Langloch
- 4.1j: Befestigungsmittel
- 4.1k, 4.1k': Basis
- 4.11: Spitze
- 4.1m: Bereich
- 4.1n, 4.1n': Flanke
- 4.1o: oberer Bereich
- 4.1p: Kipphebel
- 4.1q: Gestänge
- 4.1r: Spitze
- 4.3a: Untergreifmittel
- 4.3b: Niederhaltemittel
- 4.3c: Spitze
- 5.1, 5.2, 5.3, 5.4: Werkzeugbahnhof
- 6: Fördermittel
- 7.1, 7.2: Ladehilfsmittel
- 7.1a, 7.2a: Wand
- 7.2b: Boden
- 8: Magazinmittel
- 8.1, 8.1': Speicherelement
- 8a, b: Magazineinheit
- 8.1a: Verschlussmittel
- 8.1b, 4.1b': Gruppe
- 8.1c: Greifelement
- 8.1d: Schienenelement
- 8.1e: Vorsprung
- 8.1f: Nut
- 8.1g: Führungsmittel
- 8.1h: Verbindungsmittel
- 8.1i, 4.1i': Langloch
- 8.1j: Befestigungsmittel
- 8.1k, 4.1k': Basis
- 8.1l: Spitze
- 8.1m: Bereich
- 8.1n, 4.1n': Flanke
- 8.1o: oberer Bereich
- 8.1p: Kipphebel
- 8.1q: Gestänge
- 8.1r: Spitze
- 9, 9a-9p: Becherstange
- 9.1: Becher
- 11: Weiterbearbeitungseinrichtung
- 11.1: Eingangsbereich
- 12: Fördermittel
- 13: Positionierungseinlage
- 13.1: Oberseite
- 13.2, 13.2', 13.2'': Vorsprung
- 13.2a, b: Ausnehmung
- 13.3', 13.3 ": Innenseite
- 13.4', 13.4": Ausnehmung
- 13.5: Sockel
- 13.6: Randbereich
- 13.7: Beabstandungsmittel
- 14: Spreizstation
- 14.1: Teleskopeinheit
- 14.2: Spreizdorn
- 14.3: Verfahrelement
- 14.4: Antriebsmittel
- 15: Auskleidung
- 16: Magazinmittel
- 16.1: Fördermittel
- 17: Schalenanordnung
- 17a: oberes Ende
- 17b: unteres Ende
- 17.1: (feste) Teil-/Halbschale
- 17.1a: Abschlusskappe
- 17.1b: Bohrung
- 17.1c: Bohrung
- 17.2: (bewegliche) Teil-/Halbschale
- 17.2a: Ansatz
- 18: Trägermittel
- 18a: Flanschplatte
- 19: Antrieb
- 20: Zahnstange
- 21, 21': Zahnrad
- 22: Auflagelippe
- 23: Zahnrad
- A1, A2, A3, A4: Arbeitsbereich
- A1,2: Teilbereich.
- B₁, B₂: Bereich
- b: Abstand
- d₁, d₂: Abstand
- h: Abstand
- H: Höhe
- Kᵢ: Kavität
- N: Neigung
- R: Reihe
- S: Achse
- tᵢ: Zeit (Zeitpunkt)
- V: Vertikale
- W: Welle
- X: Verschiebungsrichtung
- ΔX , ΔY: Abstand

## Patentansprüche

1. Verfahren zum Handhaben im Wesentlichen stabförmiger Objekte, insbesondere Stangen aus vereinzelbar ineinander gestapelten Artikeln, wie Kunststoffbechern, bei Ladevorgängen in Verbindung mit einem Ladehilfsmittel, insbesondere einem Karton, wobei die zu handhabenden Objekte von einer Herstellungs- oder Bearbeitungsmaschine in einer ersten geometrischen Anordnung bereitgestellt werden, wobei zunächst wenigstens ein Teil der Objekte mittels einer ersten Greifeinrichtung ergriffen wird, anschließend eine relative Anordnung der ergriffenen Objekte zueinander verändert wird und dann die veränderte Anordnung der Objekte in das Ladehilfsmittel abgelegt wird, wobei die Objekte aufrecht stehend angeordnet werden, **dadurch gekennzeichnet, dass** vor dem Ablegen in das Ladehilfsmittel die Objekte in zugeordnete Speicherelemente von Magazinmitteln abgelegt werden und dass anschließend die Objekte einer zweiten geometrischen Anordnung mittels einer zweiten Greifeinrichtung aus dem Magazinmittel entnommen werden.

2. Verfahren nach Anspruch 1, **dadurch gekennzeichnet, dass** eine Veränderung der Objektanordnung über ein Ändern einer Geometrie der ersten Greifeinrichtung erfolgt.

3. Verfahren nach Anspruch 1 oder 2, **dadurch gekennzeichnet, dass** die erste Greifeinrichtung durch ein Handhabungsgerät, insbesondere einen Mehrachs-Industrieroboter, betätigt wird.

4. Verfahren nach einem der Ansprüche 1 bis 3, **dadurch gekennzeichnet, dass** jedes Objekt durch ein zugeordnetes Greifelement der ersten Greifeinrichtung ergriffen und gehalten wird.

5. Verfahren nach Anspruch 4, **dadurch gekennzeichnet, dass** eine Änderung der Geometrie der ersten Objektanordnung durch Änderung eines Abstandes der Greifelemente erfolgt.

6. Verfahren nach einem der Ansprüche 1 bis 5, **dadurch gekennzeichnet, dass** in den Magazinmitteln eine Anordnungsgeometrie der Objekte verändert wird.

7. Verfahren nach einem der Ansprüche 4 bis 6, **dadurch gekennzeichnet, dass** die Geometrieänderung zwischen einer ersten, beim Ergreifen der Objekte vorgegebenen Stellung und einer zweiten, durch eine angestrebte Packungsdichte in dem Ladehilfsmittel vorgegebenen relativen Stellung der Greifelemente und/oder der Speicherelemente zueinander erfolgt.

8. Verfahren nach einem der Ansprüche 1 bis 7, **dadurch gekennzeichnet, dass** die zweite Greifeinrichtung durch ein Handhabungsgerät, insbesondere einen Mehrachs-Industrieroboter, betätigt wird.

9. Verfahren nach einem der Ansprüche 1 bis 8, **dadurch gekennzeichnet, dass** die Entnahme aus dem Magazinmittel reihen- oder blockweise erfolgt.

10. Verfahren nach einem der Ansprüche 1 bis 9, **dadurch gekennzeichnet, dass** eine Länge von Objekt-Reihen in dem Magazinmittel einer Abmessung des Ladehilfsmittels entspricht.

11. Verfahren nach einem der Ansprüche 1 bis 10, **dadurch gekennzeichnet, dass** in das Ladehilfsmittel vor dem Ablegen der Objekte eine Positionierungseinlage eingebracht wird.

12. Verfahren nach Anspruch 11, **dadurch gekennzeichnet, dass** die Objekte mit zueinander parallelen Stabachsen mit einem ihrer Stabenden in Aufnahmemittel der Positionierüngseinlage eingebracht werden.

13. Verfahren nach einem der Ansprüche 1 bis 12, **dadurch gekennzeichnet, dass** die Ladehilfsmittel nach dem Ablegen der Objekte gelagert oder zu einer Weiterverarbeitung der Artikel, wie Dekorieren oder Befüllen, gefördert werden.

14. Verfahren nach Anspruch 13, **dadurch gekennzeichnet, dass** die Objekte für die Weiterverarbeitung der Artikel mittels einer weiteren Greifeinrichtung (Entnahmeeinrichtung) aus dem Ladehilfsmittel entnommen werden.

15. Verfahren nach Anspruch 14, **dadurch gekennzeichnet, dass** die Objekte reihenweise aus dem Ladehilfsmittel entnommen werden.

16. Verfahren nach Anspruch 14 oder 15, **dadurch gekennzeichnet, dass** die Entnahmeeinrichtung durch ein erstes Handhabungsgerät, insbesondere einen Mehrachs-Industrieroboter, betätigt wird.

17. Verfahren nach einem der Ansprüche 14 bis 16, **dadurch gekennzeichnet, dass** die Objekte durch ein gemeinsames Handhabungsgerät, insbesondere einen Mehrachs-Industrieroboter, aus dem Ladehilfsmittel entnommen und wieder darin abgelegt werden.

18. Verfahren nach einem der Ansprüche 1 bis 17, **dadurch gekennzeichnet, dass** eine in dem Ladehilfsmittel vorhandene Auskleidung, insbesondere ein Kunststoffbeutel, während des Ablegens und/oder der Entnahme der Objekte ausgebreitet und an die Wände des Ladehilfsmittels angelegt wird.

19. Verfahren nach einem der Ansprüche 1 bis 18, **dadurch gekennzeichnet, dass** das Ladehilfsmittel während des Ablegens und/oder der Entnahme der Objekte gegen die Vertikale geneigt wird.

20. Verfahren nach den Ansprüchen 18 und 19, **dadurch gekennzeichnet, dass** das Neigen des Ladehilfsmittels und das Ausbreiten/Anlegen der Auskleidung in einer hierfür vorgesehenen Spreizstation erfolgen.

21. Vorrichtung zum Handhaben im Wesentlichen stabförmiger Objekte, insbesondere Stangen aus vereinzelbar ineinander gestapelten Artikeln, wie Kunststoffbechern, nach deren Bereitstellung an einer entsprechenden Herstellungs- oder Bearbeitungsmaschine in einer ersten geometrischen Anordnung bei Ladevorgängen in Verbindung mit einem Ladehilfsmittel, insbesondere einem Karton, mit einer ersten Greifeinrichtung (4.1), die zum Ergreifen zumindest eines Teils der Objekte (9) an einer Schnittstelle (2.1) mit der Herstellungs- oder Bearbeitungsmaschine (2) und zum aufrecht stehenden Ablegen der Objekte (9) ausgebildet ist, **gekennzeichnet durch** Magazinmittel (8) zum Ablegen der in der ersten Greifeinrichtung (4.1) enthaltenen Objekte (9) vor einem Ablegen in das Ladehilfsmittel (7.1) und **durch** eine zweite Greifeinrichtung (4.2) zum Entnehmen einer zweiten geometrischen Anordnung von Objekten (9) aus den Magazinmitteln (8).

22. Vorrichtung nach Anspruch 21, **dadurch gekennzeichnet, dass** die erste Greifeinrichtung (4.1) zu einem Ändern der Geometrie der Objektanordnung vor einem Ablegen in das Ladehilfsmittel (7.1) ausgebildet ist.

23. Vorrichtung nach Anspruch 21 oder 22, **dadurch gekennzeichnet, dass** die Magazinmittel (8) zum Aufnehmen der Objekte (9) mit parallelen Stabachsen in einer Anordnung von Reihen ausgebildet ist.

24. Vorrichtung nach einem der Ansprüche 21 bis 23, **dadurch gekennzeichnet, dass** die Magazinmittel (8) zum Ändern der Geometrie der Objektanordnung ausgebildet sind.

25. Vorrichtung nach einem der Ansprüche 21 bis 24, **dadurch gekennzeichnet, dass** die erste Greifeinrichtung (4.1) für jedes Objekt (9) ein zugeordnetes Greifelement (4'.c) aufweist.

26. Vorrichtung nach einem der Ansprüche 21 bis 25, **dadurch gekennzeichnet, dass** die Magazinmittel (8) für jedes Objekt (9) ein zugeordnetes Speicherelement (8.1c) aufweisen.

27. Vorrichtung nach Anspruch 25 oder 26, **dadurch gekennzeichnet, dass** die Greifelemente (4.1c) und/oder die Speicherelemente (8.1c) seitliche Führungsmittel (4.1g; 8.1g) für das jeweils gehaltene Objekt (9) aufweisen.

28. Vorrichtung nach Anspruch 27, **dadurch gekennzeichnet, dass** in die Führungsmittel (4.1g) zumindest der Greifelemente (4.1c) Verschlussmittel (4.1a) zum Halten der Objekte (9) integriert sind.

29. Vorrichtung nach Anspruch 27 oder 28, **dadurch gekennzeichnet, dass** die Führungsmittel (4.1g; 8.1g) zum parallelen Ausrichten von Stabachsen der Objekte (9) ausgebildet sind.

30. Vorrichtung nach einem der Ansprüche 25 bis 29, **dadurch gekennzeichnet, dass** zumindest eine Gruppe (4.1b, 4.1b') von Greifelementen (4.1c) in einer Reihe angeordnet ist.

31. Vorrichtung nach einem der Ansprüche 26 bis 30, **dadurch gekennzeichnet, dass** zumindest eine Gruppe (8.1b, 8.1b') von Speicherelementen (8.1c) in einer Reihe angeordnet ist.

32. Vorrichtung nach Anspruch 30 oder 31, **dadurch gekennzeichnet, dass** zumindest die Greifelemente (4.1c) und/oder die Speicherelemente (8.1c) der Gruppe (4.1b, 4.1b'; 8.1b, 8.1b') beweglich angeordnet sind.

33. Vorrichtung nach Anspruch 32, **dadurch gekennzeichnet, dass** die Greifelemente (4.1c) und/oder die Speicherelemente (8.1c) in einer Richtung (X) senkrecht zur Stabachse der jeweils gehaltenen Objekte (9) beweglich sind.

34. Vorrichtung nach einem der Ansprüche 30 bis 33, **dadurch gekennzeichnet, dass** die Greifelemente (4.1c) und/oder die Speicherelemente (8.1c) der Gruppe (4.1b, 4.1b'; 8.1b, 8.1b') gleitend auf einem Schienenelement (4.1d; 8.1d) angeordnet sind, das sich in Richtung der Reihe erstreckt.

35. Vorrichtung nach einem der Ansprüche 30 bis 34, **dadurch gekennzeichnet, dass** ein seitlicher Abstand (d₁, d₂) der Greifelemente (4.1c) und/oder der Speicherelemente (8.1c) voneinander innerhalb der Reihe veränderbar ist.

36. Vorrichtung nach Anspruch 35, **dadurch gekennzeichnet, dass** über den seitlichen Abstand (d₁, d₂) eine erste, beim Ergreifen der Objekte (9) vorgegebene Stellung der Greifelemente (4.1c) und/oder der Speicherelemente (8.1c) zu einer zweiten, durch eine angestrebte Packungsdichte in dem Ladehilfsmittel (7.1, 7.2) vorgegebenen Stellung der Greifelemente (4.1c) und/oder der Speicherelemente (8.1c) veränderbar ist.

37. Vorrichtung nach einem der Ansprüche 30 bis 36, **dadurch gekennzeichnet, dass** die Greifelemente (4.1c) und/oder Speicherelemente (8.1c) der Gruppe (4.1b, 4.1b'; 8.1b, 8.1b') mit dem bzw. den jeweils benachbarten Greifelement (4.1c)/Speicherelement (8.1c) bzw. Greifelementen (4.1c)/Speicherelementen (8.1c) über Verbindungsmittel (4.1h; 8.1h) verbunden sind, durch die zwei relative Stellungen mit zwei unterschiedlichen paarweisen seitlichen Abständen (d₁, d₂) der Greifelemente (4.1c)/Speicherelemente (8.1c) definiert sind.

38. Vorrichtung nach Anspruch 37, **gekennzeichnet durch** eine einzelne Kraftquelle zum Bewegen der Greifelemente (4.1c)/Speicherelemente (8.1c) für jede Gruppe (4.1b, 4.1b' ; 8.1b, 8.1b') von Greifelementen (4.1c)/Speicherelementen (8.1c).

39. Vorrichtung nach einem der Ansprüche 21 bis 38, **dadurch gekennzeichnet, dass** die zweite Greifeinrichtung (4.2) zum reihen- bzw. blockweisen Entnehmen der Objekte (9) aus den Magazinmitteln (8) ausgebildet ist.

40. Vorrichtung nach einem der Ansprüche 21 bis 39, **gekennzeichnet durch** eine in dem Ladehilfsmittel (7.1, 7.2) angeordnete Positionierungseinlage (13).

41. Vorrichtung nach Anspruch 40, **dadurch gekennzeichnet, dass** die Positionierungseinlage (13) Aufnahmemittel (13.2, 13.2', 13.2") für die Objekte (9) aufweist, in die die Objekte (9) mit einem ihrer Stabenden einbringbar sind.

42. Vorrichtung nach einem der Ansprüche 21 bis 41, **gekennzeichnet durch** eine weitere Greifeinrichtung (4.3) zum Entnehmen der Objekte (9) (Entnahmeeinrichtung) aus dem Ladehilfsmittel (7.2).

43. Vorrichtung nach Anspruch 42, **dadurch gekennzeichnet, dass** die Entnahmeeinrichtung (4.2) zum reihenweisen Entnehmen der Objekte ausgebildet ist.

44. Vorrichtung nach Anspruch 42 oder 43, **dadurch gekennzeichnet, dass** die Entnahmeeinrichtung (4.3) für jedes zu entnehmende Objekt (9) eine Schalenanordnung (17) aus wenigstens zwei zum Aufnehmen des Objekts (9) relativ zueinander um eine gemeinsame Achse rotierbare Teilschalen (17.1, 17.2) aufweist, wobei das Objekt (9) in einem innerhalb der Schalenanordnung (17) ausgebildeten Raum aufnehmbar ist und durch an einem Ende (17b) der Schalenanordnung (17) vorgesehene Haltemittel (22) in diesem gehalten ist.

45. Vorrichtung nach Anspruch 44, **gekennzeichnet durch** einen Antrieb (19) zum gemeinsamen Rotieren der Teilschalen (17.2) der Schalenanordnungen (17) der Entnahmeeinrichtung (4.3).

46. Vorrichtung nach Anspruch 42 oder 43, **dadurch gekennzeichnet, dass** die Entnahmeeinrichtung (4.3) für jedes zu entnehmende Objekt (9) eine Klemmeinrichtung aufweist, die aus einem Untergreifmittel (4.3a, 4.3c) zum Untergreifen des Objekts (9) und einem Niederhaltemittel (4.3b) zum Einklemmen des Objekts (9) zwischen Untergreifmittel (4.3a, 4.3c) und Niederhaltemittel (9.3b) gebildet ist.

47. Vorrichtung nach einem der Ansprüche 21 bis 46, **gekennzeichnet durch** Fördermittel (6, 12) zum Fördern der Ladehilfsmittel (7.2) zu einer Weiterbearbeitungseinrichtung (11) für die Artikel (9.1), wie einer Dekorier- oder Befülleinrichtung oder zu einer Lagereinrichtung.

48. Vorrichtung nach einem der Ansprüche 42 bis 47, **dadurch gekennzeichnet, dass** die Objekte (9) nach erfolgter Weiterbearbeitung der Artikel (9.1) mittels einer weiteren, insbesondere der ersten oder der zweiten Greifeinrichtung (4.1; 4.2) oder der Entnahmeeinrichtung (4.3) entsprechenden Greifeinrichtung (4.4) wieder in das Ladehilfsmittel (7.1) ablegbar sind.

49. Vorrichtung nach einem der Ansprüche 21 bis 48, **gekennzeichnet durch** eine Spreiztation (14), die zum Ausbreiten und gleichzeitigen Anlegen einer in dem Ladehilfsmittel (7.1, 7.2) vorhandenen Auskleidung (15), insbesondere eines Kunststoffbeutels, an die Wände (7.1a, 7.2a) des Ladehilfsmittels (7.1, 7.2) während des Ablegens der Objekte (9) ausgebildet ist.

50. Vorrichtung nach Anspruch 49, **dadurch gekennzeichnet**, das die Spreizstation (14) zum Neigen des Lädehilfsmittels (7.1, 7.2) gegen die Vertikale (V) während des Ablegens der Objekte (9) ausgebildet ist.

51. Vorrichtung nach einem der Ansprüche 21 bis 50, **dadurch gekennzeichnet, dass** die erste Greifeinrichtung (4.1) durch ein Handhabungsgerät (3.1), insbesondere einen Mehrachs-Industrieroboter, betätigbar ist.

52. Vorrichtung nach einem der Ansprüche 21 bis 51, **dadurch gekennzeichnet, dass** die zweite Greifeinrichtung (4.2) durch ein Handhabungsgerät (3.2), insbesondere einen Mehrachs-Industrieroboter, betätigbar ist.

53. Vorrichtung nach einem der Ansprüche 42 bis 52, **dadurch gekennzeichnet, dass** die Entnahmeeinrichtung (4.3) durch ein Handhabungsgerät (3.3), insbesondere einen Mehrachs-Industrieroboter, betätigbar ist.

54. Vorrichtung nach einem der Ansprüche 48 bis 53, **dadurch gekennzeichnet, dass** die weitere Greifeinrichtung (4.4) durch ein Handhabungsgerät (3.4), insbesondere einen Mehrachs-Industrieroboter, betätigbar ist.

## Claims

1. A method of handling substantially stick-shaped objects, in particular columns of articles which can be stacked separably inside one another, such as plastic cups, in loading processes in conjunction with a loading aid, in particular a carton, the objects to be handled being made available in a first geometric arrangement by a manufacturing or processing machine, at least a part of the objects firstly being gripped by means of a first gripping device, then a relative arrangement of the gripped objects being modified and then the modified arrangement of the objects being deposited in the loading aid, the objects being arranged in upright manner, **characterized in that** prior to deposition in the loading aid the objects are deposited in associated storage elements of magazine means and that then the objects are removed in a second geometric arrangement from the magazine means by a second gripping device.

2. A method according to claim 1, **characterized in that** modification of the object arrangement is brought about by changing the geometry of the first gripping device.

3. A method according to claim 1 or claim 2, **characterized in that** the first gripping device is operated by a handling device, in particular a multiaxial industrial robot.

4. A method according to any one of claims 1 to 3, **characterized in that** each object is gripped and held by an associated gripping element of the first gripping device.

5. A method according to claim 4, **characterized in that** modification of the geometry of the first object arrangement is brought about by changing the spacing of the gripping elements.

6. A method according to any one of claims 1 to 5 **characterized in that** an arrangement geometry of the objects is modified in the magazine means.

7. A method according to any one of claims 4 to 6, **characterized in that** modification of the geometry takes place between a first position predetermined on gripping the objects and a second, relative position, predetermined by a desired packing density in the loading aid, of the gripping elements and/or storage elements relative to one another.

8. A method according to any one of claims 1 to 7, **characterized in that** the second gripping device is operated by a handling device, in particular a multiaxial industrial robot.

9. A method according to any one of claims 1 to 8, **characterized in that** removal from the magazine means takes place row-wise or block-wise.

10. A method according to any one of claims 1 to 9, **characterized in that** the length of the rows of objects in the magazine means corresponds to a dimension of the loading aid.

11. A method according to any one of claims 1 to 10, **characterized in that** a positioning insert is introduced into the loading aid prior to deposition of the objects.

12. A method according to claim 11, **characterized in that** the objects are brought, with mutually parallel stick axes, with one of their stick ends into receiving means of the positioning insert.

13. A method according to any one of claims 1 to 12, **characterized in that**, following deposition of the objects, the loading aids are stored or conveyed for further processing of the articles, such as decorating or filling.

14. A method according to claim 13, **characterized in that**, for further processing of the articles, the objects are removed from the loading aid by means of a further gripping device (removal device).

15. A method according to claim 14, **characterized in that** the objects are removed from the loading aid in rows.

16. A method according to claim 14 or claim 15, **characterized in that** the removal device is operated by a first handling device, in particular a multiaxial industrial robot.

17. A method according to any one of claims 14 to 16, **characterized in that** the objects are removed from the loading aid and redeposited therein by a common handling device, in particular a multiaxial industrial robot.

18. A method according to any one of claims 1 to 17, **characterized in that** a lining present in the loading aid, in particular a plastic bag, is spread out during deposition and/or removal of the objects and applied to the walls of the loading aid.

19. A method according to any one of claims 1 to 18, **characterized in that** the loading aid is inclined relative to vertical during deposition and/or removal of the objects.

20. A method according to claims 18 and 19, **characterized in that** inclination of the loading aid and spreading out/application of the lining takes place in a spreading station provided for this purpose.

21. A device for handling substantially stick-shaped objects, particularly columns of articles stacked individually inside one another, such as plastic cups, following the provision thereof in a first geometric arrangement on a corresponding manufacturing or processing machine in loading processes in conjunction with a loading aid, in particular a carton, having a first gripping device (4.1) constructed for gripping at least a part of the objects (9) at an interface (2.1) with the manufacturing or processing machine (2) and for depositing the objects (9) in upright manner, **characterized by** magazine means (8) for depositing the objects (9) contained in the first gripping device (4.1) prior to deposition in the loading aid (7.1) and by a second gripping device (4.2) for removing a second geometric arrangement of objects (9) from the magazine means (8).

22. A device according to claim 21, **characterized in that** the first gripping device (4.1) is constructed for modifying the geometry of the object arrangement prior to deposition in the loading aid (7.1).

23. A device according to claim 21, **characterized in that** the magazine means (8) is constructed to receive the objects (9) with parallel stick axes in a row arrangement.

24. A device according to claim 21 to claim 22, **characterized in that** the magazine means (8) are constructed for modifying the geometry of the object arrangement.

25. A device according to any one of claims 21 to 24, **characterized in that** the first gripping device (4.1) has an associated gripping element (4.1c) for each object (9).

26. A device according to any one of claims 21 to 25, **characterized in that** the magazine means (8) have an associated storage element (8.1c) for each object (9).

27. A device according to claim 25 or claim 26, **characterized in that** the gripping elements (4.1c) and/or the storage elements (8.1c) comprise lateral guide means (4.1g; 8.1g) for the object (9) held in each case.

28. A device according to claim 27, **characterized in that** closure means (4.1a) for holding the objects (9) are incorporated into the guide elements (4.1g) at least of the gripping elements (4.1c).

29. A device according to claim 27 or 28, **characterized in that** the guide means (4.1g; 8.1g) are constructed for parallel orientation of the stick axes of the objects (9).

30. A device according to any one of claims 25 to 29, **characterized in that** at least one group (4.1b, 4.1b') of gripping elements (4.1c) is arranged in a row.

31. A device according to any one of claims 26 to 30, **characterized in that** at least one group (8.1b, 8.1b') of storage elements (8.1c) is arranged in a row.

32. A device according to claim 30 or claim 31, **characterized in that** at least the gripping elements (4.1c) and/or the storage elements (8.1c) of the group (4.1b, 4.lb'; 8.1b, 8.1b') are arranged movably.

33. A device according to claim 32, **characterized in that** the gripping elements (4.1c) and/or storage elements (8.1c) are movable in a direction (X) perpendicular to the stick axis of the objects (9) held in each case.

34. A device according to any one of claims 30 to 33, **characterized in that** the gripping elements (4.1c) and/or storage elements (8.1c) of the group (4.1b, 4.1b'; 8.1b, 8.1b') are slidingly arranged on a rail element (4.1d; 8.1d) extending in the direction of the row.

35. A device according to any one of claims 30 to 34, **characterized in that** the mutual lateral spacing (d₁, d₂) of the gripping elements (4.1c) and/or storage elements (8.1c) is variable within the row.

36. A device according to claim 35, **characterized in that** by means of the lateral spacing (d₁, d₂) it is possible to modify a first position of the gripping elements (4.1c) and/or storage elements (8.1c) predetermined on gripping the objects (9) with respect to a second position of the gripping elements (4.1c) and/or storage elements (8.1c) predetermined as a result of a desired packing density in the loading aid (7.1, 7.2).

37. A device according to any one of claims 30 to 36, **characterized in that** the gripping elements (4.1c) and/or storage elements (8.1c) of the group (4.1b, 4.1b' ; 8.1b, 8.1b') are connected to the in each case adjacent gripping element (4.1c)/storage element (8.1c) or gripping elements (4.1c)/storage elements (8.1c) by connecting means (4.1h; 8.1h), by which two relative positions with two different paired lateral spacings (d₁, d₂) of the gripping elements (4.1c)/storage elements (8.1c) are defined.

38. A device according to claim 37, **characterized by** an individual power source for moving the gripping elements (4.1c)/storage elements (8.1c) for each group (4.1b, 4.1b'; 8.1b, 8.1b') of gripping elements (4.1c)/storage elements (8.1c).

39. A device according to any one of claims 21 to 38, **characterized in that** the second gripping device (4.2) is constructed for row-wise or block-wise removal of the objects (9) from the magazine means (8).

40. A device according to any one of claims 21 to 39, **characterized by** a positioning insert (13) arranged in the loading aids (7.1, 7.2).

41. A device according to claim 40, **characterized in that** the positioning insert (13) comprises receiving means (13.2, 13.2', 13.2") for the objects (9), into which the objects (9) may be introduced by one of their stick ends.

42. A device according to any one of claims 21 to 41, **characterized by** a further gripping device (4.3) for removing the objects (9) (removal device) from the loading aid (7.2).

43. A device according to claim 42, **characterized in that** the removal device (4.2) is constructed for row-wise removal of the objects.

44. A device according to claim 42 or claim 43, **characterized in that** the removal device (4.3) for each object (9) to be removed comprises a shell arrangement (17) formed from at least two part-shells (17.1, 17.2) rotatable relative to one another about a common axis for receiving the object (9), the object (9) being receivable in a space constructed within the shell arrangement (17) and being held therein by retaining means (22) provided at one end (17b) of the shell arrangement (17).

45. A device according to claim 44, **characterized by** a drive (19) for joint rotation of the part-shells (17.2) of the shell arrangements (17) of the removal device (4.3).

46. A device according to claim 42 or claim 43, **characterized in that** the removal device (4.3) for each object (9) to be removed comprises a clamping device formed from an under-gripping device (4.3a, 4.3c) for gripping the object (9) from beneath and a hold-down means (4.3b) for clamping the object (9) between under-gripping device (4.3a, 4.3c) and hold-down means (4.3b).

47. A device according to any one of claims 21 to 46, **characterized by** conveying means (6, 12) for conveying the loading aid (7.2) to a further processing device (11) for the articles (9.1), such as a decorating or filling device, or to a storage device.

48. A device according to any one of claims 42 to 47, **characterized in that**, after further processing of the articles (9.1), the objects (9) are deposited back in the loading aid (7.1) by means of a further gripping device (4.4) corresponding in particular to the first or second gripping device (4.1; 4.2) or the removal device (4.3).

49. A device according to any one of claims 21 to 48, **characterized by** a spreading station (14) for spreading out and simultaneously applying a lining (15), in particular a plastic bag, present in the loading aid (7.1, 7.2) against the walls (7.1a, 7.2a) of the loading aid (7.1, 7.2) during deposition of the objects (9).

50. A device according to claim 49, **characterized in that** the spreading station (14) is constructed for inclining the loading aid (7.1, 7.2) relative to vertical (V) during deposition of the objects (9).

51. A device according to any one of claims 21 to 50, **characterized in that** the first gripping device (4.1) is operable by a handling device (3.1), in particular a multiaxial industrial robot.

52. A device according to any one of claims 31 to 51, **characterized in that** the second gripping device (4.2) is operable by a handling device (3.2), in particular a multiaxial industrial robot.

53. A device according to any one of claims 42 to 52 **characterized in that** the removal device (4.3) is operable by a handling device (3.3), in particular a multiaxial industrial robot.

54. A device according to any one of claims 48 to 53, **characterized in that** the further gripping device (4.4) is operable by a handling device (3.4), in particular a multiaxial industrial robot.

## Revendications

1. Procédé pour manipuler des objets essentiellement en barre, et notamment des alignements d'articles distincts empilés les uns dans les autres, tels des gobelets en plastique, lors de procédures de chargement avec un auxiliaire de chargement, tel un carton, les objets à manipuler étant amenés par une machine de fabrication ou de traitement dans une première disposition géométrique, une partie au moins des objets étant saisie au moyen d'un premier dispositif de préhension, la disposition des objets saisis relativement les uns par rapport aux autres étant ensuite modifiée, puis la disposition modifiée des objets étant déposée dans l'auxiliaire de chargement, les objets étant disposés debout verticalement, **caractérisé en ce qu'**avant la dépose des objets dans l'auxiliaire de chargement, les objets sont déposés dans des éléments de stockage affectés dans des magasins puis **en ce que** les objets sont extraite dans une deuxième disposition géométrique du magasin au moyen d'un deuxième dispositif de préhension.

2. Procédé selon la revendication 1, **caractérisé en ce que** la modification de la disposition des objets est obtenue en modifiant la géométrie du premier dispositif de préhension.

3. Procédé selon la revendication 1 ou 2, **caractérisé en ce que** le premier dispositif de préhension est actionné par un appareil de manipulation, singulièrement par un robot industriel à axes multiples.

4. Procédé selon une des revendications 1 à 3, **caractérisé en ce que** chaque objet est saisi et tenu par un élément de préhension affecté du premier dispositif de préhension.

5. Procédé selon la revendication 4, **caractérisé en ce que** la modification de la géométrie de la première disposition des objets est obtenue en modifiant un écartement des éléments de préhension.

6. Procédé selon une des revendications 1 à 5, **caractérisé en ce que** dans les magasins, une géométrie de la disposition des objets est modifiée.

7. Procédé selon une des revendications 4 à 6, **caractérisé en ce que** la modification de la géométrie a lieu entre une première position imposée à la préhension des objets et une deuxième position des éléments de préhension et/ou des éléments de stockage relativement les uns par rapport aux autres, imposée par le degré de bourrage auquel il est aspiré dans l'auxiliaire de chargement.

8. Procédé selon une des revendications 1 à 7, **caractérisé en ce que** le deuxième dispositif de préhension est actionné par un appareil de manipulation, singulièrement par un robot industriel à axes multiples.

9. Procédé selon une des revendications 1 à 8, **caractérisé en ce que** le prélèvement dans le magasin est effectué par rangée ou par bloc.

10. Procédé selon une des revendications 1 à 9, **caractérisé en ce qu'**une longueur des rangées d'objets dans le magasin est égale à une dimension de l'auxiliaire de chargement.

11. Procédé selon une des revendications 1 à 10, **caractérisé en ce qu'**une pièce intercalaire est placée dans l'auxiliaire de chargement avant que les objets y soient déposés.

12. Procédé selon la revendication 11, **caractérisé en ce que** les objets sont placés avec une de leurs extrémités de barre dans des logements dans la pièce intercalaire de positionnement, les axes de barre étant parallèles entre eux.

13. Procédé selon une des revendications 1 à 12, **caractérisé en ce que** les auxiliaires de chargement sont entreposés après que les objets y aient été déposés ou sont transportés vers un poste de traitement postérieur des articles, telle l'application d'un décor ou un remplissage.

14. Procédé selon la revendication 13, **caractérisé en ce que** les objets destinés à un traitement postérieur des articles sont extraits de l'auxiliaire de chargement au moyen d'un autre dispositif de préhension (dispositif de prélèvement).

15. Procédé selon la revendication 14, **caractérisé en ce que** les objets sont extraits de l'auxiliaire de chargement par rangées.

16. Procédé selon la revendication 14 ou 15, **caractérisé en ce que** le dispositif de prélèvement est actionné par un premier appareil de manipulation, singulièrement par un robot industriel à axes multiples.

17. Procédé selon une des revendications 14 à 16, **caractérisé en ce que** les objets sont extraits de l'auxiliaire de chargement par un appareil de manipulation commun, singulièrement un robot industriel à axes multiples avant d'y être redéposés par les mêmes moyens.

18. Procédé selon une des revendications 1 à 17, **caractérisé en ce qu'**une garniture présente dans l'auxiliaire de chargement, notamment un sac en plastique, s'élargisse durant la dépose et/ou le prélèvement des objets et s'appuie contre les parois de l'auxiliaire de chargement.

19. Procédé selon une des revendications 1 à 18, **caractérisé en ce que** l'auxiliaire de chargement s'incline par rapport à la verticale durant la dépose et /ou le prélèvement des objets.

20. Procédé selon les revendications 18 et 19, **caractérisé en ce que** l'inclinaison de l'auxiliaire de chargement et le déploiement ou la pose de la garniture ont lieu dans une station d'écartement prévue à cet effet.

21. Dispositif pour manipuler des objets essentiellement en barre, et notamment des alignements d'articles distincts empilés les uns dans les autres, tels des gobelets de plastique, après leur mise à disposition près d'une machine de fabrication ou de traitement adéquate dans une première disposition géométrique lors de procédures de chargement avec un auxiliaire de chargement, notamment un carton, ledit dispositif comprenant un premier dispositif de préhension (4.1) formé pour saisir au moins une partie des objets (9) à une interface (2.1) avec la machine de fabrication ou de traitement (2) et pour déposer les objets (9) debout à la verticale, **caractérisé par** des magasins (8) pour déposer les objets (9) tenus par le premier dispositif de préhension (4.1) avant leur dépose dans l'auxiliaire de chargement (7.1) et par un deuxième dispositif de préhension (4.2) pour extraire des magasins (8) une deuxième disposition géométrique des objets (9).

22. Dispositif selon la revendication 21, **caractérisé en ce que** le premier dispositif de préhension (4.1) est formé pour modifier la géométrie de la disposition des objets avant leur dépose dans l'auxiliaire de chargement (7.1).

23. Dispositif selon la revendication 21 ou 22, **caractérisé en ce que** les magasins (8) sont formés pour prendre les objets (9) disposés en rangées avec des axes de barre parallèles.

24. Dispositif selon une des revendications 21 à 23, **caractérisé en ce que** les magasins (8) sont formés pour modifier la géométrie de la disposition des objets.

25. Dispositif selon une des revendications 21 à 24, **caractérisé en ce que** le premier dispositif de préhension (4.1) présente pour chaque objet (9) un élément de préhension (4.1c) qui lui est affecté.

26. Dispositif selon une des revendications 21 à 25, **caractérisé en ce que** les magasins (8) présentent pour chaque objet (9) un élément de stockage (8.1c) qui lui est affecté.

27. Dispositif selon la revendication 25 ou 26, **caractérisé en ce que** les éléments de préhension (4.1c) et/ou les éléments de stockage (8.1c) présentent des moyens de guidage (4.1g; 8.1g) latéraux pour l'objet tenu (9) concerné.

28. Dispositif selon la revendication 27, **caractérisé en ce que** des moyens de fermeture (4.1a) pour tenir les objets (9) sont intégrés dans les moyens de guidage (4.1g) d'au moins les éléments de préhension (4.1c).

29. Dispositif selon la revendication 27 ou 28, **caractérisé en ce que** les moyens de guidage (4.1g; 8.1g) sont formés pour aligner parallèlement les axes de barre des objets (9).

30. Dispositif selon une des revendications 25 à 29, **caractérisé en ce qu'** au moins un groupe (4.1b, 4.1b') d' éléments de préhension (4.1c) est disposé en une rangée.

31. Dispositif selon une des revendications 26 à 30, **caractérisé en ce qu'** au moins un groupe (8.1b, 8.1b') d' éléments de stockage (8.1c) est disposé en une rangée.

32. Dispositif selon la revendication 30 ou 31, **caractérisé en ce qu'**au moins les éléments de préhension (4.1c) et/ou les éléments de stockage (8.1c) du groupe (4.1b, 4.1b'; 8.1b, 8.1b') sont disposés de manière mobile.

33. Dispositif selon la revendication 32, **caractérisé en ce que** les éléments de préhension (4.1c) et/ou les éléments de stockage (8.1c) sont mobiles dans une direction (X) perpendiculairement à l'axe de barre des objets (9) tenus concernés.

34. Dispositif selon une des revendications 30 à 33, **caractérisé en ce que** les éléments de préhension (4.1c) et/ou les éléments de stockage (8.1c) du groupe (4.1b, 4.1b'; 8.1b, 8.1b') sont disposés de manière coulissante sur un élément de rail (4.1d ; 8.1d) qui s'étend en direction de la rangée.

35. Dispositif selon une des revendications 30 à 34, **caractérisé en ce qu'**un écartement latéral (d₁, d₂) des éléments de préhension (4.1c) et/ou des éléments de stockage (8.1c) entre eux est variable au sein de la rangée.

36. Dispositif selon la revendication 35, **caractérisé en ce que** par l'intermédiaire de l'écartement latéral (d₁, d₂), une première position des éléments de préhension (4.1c) et/ou des éléments de stockage (8.1c) imposée à la prise des objets (9) est variable par rapport à une deuxième position des éléments de préhension (4.1c) et/ou des éléments de stockage (8.1c) imposée par le degré de bourrage auquel il est aspiré dans l'auxiliaire de chargement (7.1, 7.2).

37. Dispositif selon une des revendications 30 à 36, **caractérisé en ce que** les éléments de préhension (4.1c) et/ou les éléments de stockage (8.1c) du groupe (4.1b, 4.1b'; 8.1b, 8.1b') sont reliés à l'élément de préhension (4.1c) ou l'élément de stockage (8.1c) voisin respectif, ou aux éléments de préhension (4.1c) ou de stockage (8.1c) , par l'intermédiaire de moyens de liaison (4.1h; 8.1h), grâce auxquels les deux positions relatives sont définies avec deux écartements latéraux différents (d₁, d₂) deux par deux des éléments de préhension (4.1c) ou de stockage (8.1c).

38. Dispositif selon la revendication 37, **caractérisé par** une source de force unique pour manoeuvrer les éléments de préhension (4.1c) ou de stockage (8.1c) pour chaque groupe (4.1b, 4,1b'; 8.1b, 8.1b') d'éléments de préhension (4.1c) ou de stockage (8.1c).

39. Dispositif selon une des revendications 21 à 38, **caractérisé en ce que** le deuxième dispositif de préhension (4.2) est formé pour extraire les objets (9) par rangée ou par bloc des magasins (8).

40. Dispositif selon une des revendications 21 à 39, **caractérisé par** une pièce intercalaire (13) placée dans l'auxiliaire de chargement (7.1, 7.2).

41. Dispositif selon la revendication 40, **caractérisé en ce que** la pièce intercalaire (13) présente des logements (13.2, 13.2', 13.2") pour les objets (9), logements dans lesquels lesdits objets (9) peuvent être insérés par une de leur extrémité de barre.

42. Dispositif selon une des revendications 21 à 41, **caractérisé par** un deuxième dispositif de préhension (4.3) pour extraire les objets (9) (dispositif de prélèvement) de l'auxiliaire de chargement (7.2) .

43. Dispositif selon la revendication 42, **caractérisé en ce que** le dispositif de prélèvement (4.2) est formé pour extraire les objets par rangée.

44. Dispositif selon la revendication 42 ou 43, **caractérisé en ce que** le dispositif de prélèvement (4.3) présente pour chacun des objets (9) à saisir un agencement de coques (17) composé d'au moins deux demi-coques (17.1, 17.2) pouvant tourner relativement l'une par rapport à l'autre autour d'un axe commun pour prendre l'objet (9), ledit objet (9) pouvant être pris dans un espace ménagé à l'intérieur de l'agencement de coques (17) et étant maintenu dans ledit espace par des moyens de retenue (22) prévus à une extrémité (17b) de l'agencement de coques (17).

45. Dispositif selon la revendication 44, **caractérisé par** un moteur (19) entraînant la rotation commune des demi-coques (17.2) des agencements de coques (17) du dispositif de prélèvement (4.3).

46. Dispositif selon la revendication 42 ou 43, **caractérisé en ce que** le dispositif de prélèvement (4.3) des objets (9) à prendre présente pour chacun un dispositif de serrage, composé d'un organe de préhension inférieur (4.3a, 4.3c) tenant l'objet (9) par le dessous et d'un organe de serre-flan (4.3b) pour coincer l'objet (9) entre l'organe de préhension inférieur (4.3a, 4.3c) et le serre-flan (4.3b).

47. Dispositif selon une des revendications 21 à 46, **caractérisé par** des moyens de convoyage (6, 12) pour transporter les auxiliaires de chargement (7.2) vers un dispositif de traitement postérieur (11) pour les articles (9.1), tel un dispositif de décor ou de remplissage ou vers un dispositif d'entreposage.

48. Dispositif selon une des revendications 42 à 47, **caractérisé en ce que** les objets (9), après achèvement du traitement postérieur des articles (9.1), peuvent être redéposés dans l'auxiliaire de chargement (7.1) au moyen d'un autre dispositif de préhension (4.4) identique notamment au premier ou au deuxième dispositif de préhension (4.1; 4.2), ou au dispositif de prélèvement (4.3).

49. Dispositif selon une des revendications 21 à 48, **caractérisé par** une station d'écartement (14), laquelle est formée pour écarter et simultanément appuyer une garniture (15) présente dans l'auxiliaire de chargement (7.1, 7.2), singulièrement un sac en plastique, contre les parois (7.1a, 7.2a) de l'auxiliaire de chargement (7.1, 7.2) pendant la dépose des objets (9).

50. Dispositif selon la revendication 49, **caractérisé en ce que** la station d'écartement (14) est constituée pour incliner l'auxiliaire de chargement (7.1, 7.2) par rapport à la verticale (V) pendant la dépose des objets (9).

51. Dispositif selon une des revendications 21 à 50, **caractérisé en ce que** le premier dispositif de préhension (4.1) est actionné par un appareil de manipulation (3.1), singulièrement un robot industriel à axes multiples.

52. Dispositif selon une des revendications 21 à 51, **caractérisé en ce que** le deuxième dispositif de préhension (4.2) est actionné par un appareil de manipulation (3.2), singulièrement un robot industriel à axes multiples.

53. Dispositif selon une des revendications 42 à 52, **caractérisé en ce que** le dispositif de prélèvement (4.3) est actionné par un appareil de manipulation (3.3), singulièrement un robot industriel à axes multiples.

54. Dispositif selon une des revendications 48 à 53, **caractérisé en ce que** l'autre dispositif de préhension (4.4) est actionné par un appareil de manipulation (3.4), singulièrement un robot industriel à axes multiples.
